(19) Europäisches Patentamt
European Patent Office
Office européen des brevets

(11) **EP 2 242 882 B1**

(12) **EUROPEAN PATENT SPECIFICATION**

(45) Date of publication and mention
of the grant of the patent:
**02.11.2016 Bulletin 2016/44**

(21) Application number: **09704720.3**

(22) Date of filing: **19.01.2009**

(51) Int Cl.:
*D06M 13/08* (2006.01)    *D06M 13/156* (2006.01)
*C08K 5/03* (2006.01)    *C09K 21/08* (2006.01)
*D06M 11/47* (2006.01)    *D06M 11/58* (2006.01)
*D06M 11/70* (2006.01)    *D06M 11/71* (2006.01)
*D06M 13/175* (2006.01)

(86) International application number:
**PCT/IL2009/000076**

(87) International publication number:
**WO 2009/093234 (30.07.2009 Gazette 2009/31)**

(54) **IMPROVED FLAME RETARDATION OF TEXTILES**

VERBESSERTE SCHWERENTFLAMMBARE TEXTILIEN

IGNIFUGATION AMÉLIORÉE DE TEXTILES

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **23.01.2008   IL 18898308
25.08.2008   US 230151**

(43) Date of publication of application:
**27.10.2010   Bulletin 2010/43**

(73) Proprietor: **Bromine Compounds Ltd.
Beer-Sheva 84101 (IL)**

(72) Inventors:
• **MAZOR, Royi**
  **85325 Beit-kama (IL)**
• **SHALEV, Itzhak**
  **76880 Beit-Gamliel (IL)**
• **SHOSHAN, Asher**
  **84690 Beer-sheva (IL)**
• **PELED, Michael**
  **84847 Beer-sheva (IL)**
• **RAPAPORT, Ella**
  **79335 Doar-Na Lachish Darom (IL)**
• **BEN-VAIS, Orit**
  **85025 Beer-Sheva (IL)**

(74) Representative: **Dennemeyer & Associates S.A.
Postfach 70 04 25
81304 München (DE)**

(56) References cited:
**WO-A-2005/103361      WO-A2-2006/072952
GB-A- 2 001 115      US-A- 5 773 501
US-A1- 2004 121 114**

• **DATABASE WPI Week 199037 Thomson
Scientific, London, GB; AN 1990-279332
XP002529097 & JP 02 196867 A (MITSUBISHI
YUKA BADISCHE KK) 3 August 1990 (1990-08-03)**

**Description**

FIELD AND BACKGROUND OF THE INVENTION

The present invention, in some embodiments thereof, relates to the field of flame-retardants and, more particularly, but not exclusively, to novel flame retardant formulations that form homogeneous flame retardant films on textiles, their preparation and flame-retarded textile fabrics which comprise these films.

Textiles are an essential part of everyday life and are found, for example, in draperies, cloths, furniture and vehicle upholsteries, toys, packaging material and many more applications. Consequently, textile flammability is a serious industrial concern.

Flame retardants used for the protection of textiles must be environmentally and physiologically safe, compatible with the fabric, non- damaging to the aesthetical and textural properties of the fabric (for example, to remain transparent) and must be resistant to extensive washing and cleaning (generally termed as "durable"). Above all, a flame retardant agent suitable for textile treatment should pass the standard flammability tests in the field, preferably even after 5, 10 or 50 washing cycles.

Flame retardation of textiles using aromatic bromine-containing formulations adhered to the substrates by means of binders, has been long established (for instance, U.S. Patent No. 3,955,032 and U.S. Patent No. 4,600, 606).

The main drawbacks of existing formulations include high bromine content demand, high dry add-on demand, streak marks on dark fabrics, excessive dripping during combustion of thermoplastic fibers and dispersion instability. Most of these drawbacks are inherent to the aromatic bromine compounds used. Furthermore, using existing aromatic bromine containing formulations, the percentage resin component may be as high as 60-70% by weight of the total fabric weight (add-on), in order to obtain satisfactory flame retardation (see Toxicological Risks of Selected Flame-Retardant Chemicals (2000), by Donald E. Gardner (Chair) Subcommittee on Flame-Retardant Chemicals, Committee on Toxicology, Board on Environmental Studies and Toxicology, National Research Council page 507). This high add-on is due in part to the large amount of binder needed to fix the flame retardant (FR) agents to the textile. The binder may be as high as 50% by weight of the total FR formulation (see Toxicological Risks of Selected Flame-Retardant Chemicals (2000) page 507). Due to its substantial presence, the binder contributes to flammability and dripping, which requires more bromine content, thus creating an inefficient cycle. Yet further, often, the high add-on adversely affects otherwise desirable aesthetical and textural properties of the fabric. For example, upon application of a FR with a large amount of binder, fabrics may become stiff and harsh and may have duller shades, and poor tear strength and abrasion properties.

Over the years, several antimony-based compounds have been used as flame-retardant synergists, including $Sb_2O_3$, $Sb_2O_5$ and $Na_3SbO_4$ (Touval, I., (1993) "Antimony and other inorganic Flame Retardants" in Kirk Othmer's Encyclopedia of Chemical Technology, Vol. 10, p. 936-954, 4th Edition, John Wiley and Sons, N.Y.). Antimony based compounds are very expensive and are therefore not used on their own, but are used as synergists with other flame retardants. The addition of antimony oxide to halogenated flame retardants increases their efficiency and reduces the amount of additives and/or halogenated FR agent to be used. However, the addition of such synergist is costly and further contributes to the high add-on of the formulation.

Thickening agents are also often added to flame retardant formulations in order to increase their viscosity and facilitate the application of the FR formulations on the textiles. However, as in the case of binders, the thickening agents are often flammable compounds themselves, and therefore an additional amount of FR agent and/or synergist in necessary to overcome this adverse effect.

Thus, order to obtain better flame retarded textiles, an efficient flame retardant, which can be useful in low binder/thickener content, and which would have good dispersion properties, on top of the other qualities discussed above, is required.

It is important to note that although textiles may be resistant to open flame burning, the smoldering (also termed "after flame"), which may persist after the open flame has been extinguished, can eventually lead to complete digestion of the fabric (see, for example, "Toxicological Risks of Selected Flame-Retardant Chemicals - 2000", Donald E. Gardner (Chair), Subcommittee on Flame-Retardant Chemicals, Committee on Toxicology, Board on Environmental Studies and Toxicology, National Research Council). Accordingly, in order to overcome the smoldering problem in textiles, the addition of a smoldering suppressant (SS), which is also referred to herein, interchangeably, as a smoldering suppressing agent, is frequently required.

WO 07/096883, by the present inventors, discloses the preparation and use of Aluminum Ammonium Super Phosphoric acid salt (AIASP) as a novel smoldering suppressant agent that is highly beneficial for application onto textiles.

Tetrabromobisphenol-A bis(2,3-dibromopropyl ether) (FR-720) is a flame retardant that comprises a combination of aromatic and aliphatic bromine atoms, which provides high FR efficiency and good thermal stability. FR-720 is useful in many applications, especially, but not exclusively, in the field of flame retardation for plastic compositions. FR-720 is insoluble in water and has a relatively low melting range (113-117 °C). The preparation of FR-720 is described, for example, in U.S. Patent No. 5,710,347.

WO 05/103361, by the present inventors, discloses flame retardant aqueous dispersions or suspensions comprising FR-720 for use in textile. The binder content in these formulations is between 30 % and 40 % by weight of the aqueous formulation.

SUMMARY OF THE INVENTION

It has now been found that FR-720 can be processed to obtain a novel flame retardant formulation, which can be applied on a variety of fabrics while exhibiting unexpected homogeneity and transparency, at a relatively low binder content. This formulation forms a transparent flame retardant film on the textile fabric, the properties of which are maintained after many washing cycles, and are further maintained even when the whitish antimony-based FR synergist forms part of the formulation.

It has been further surprisingly found that the addition of AIASP to the flame retardant formulations described herein can result in a novel flame retardant and smoldering suppressant formulation, which forms a flame retardant and smoldering suppressant film comprising FR-720 particles, such that the FR-720 particles are homogeneously dispersed in or on a variety of fabrics, at low binder and thickener contents, yet yielding a durability of at least 15 washing cycles.

Thus, according to an aspect of embodiments of the present invention there is provided a flame retardant formulation comprising tetrabromobisphenol A bis(2,3-dibromopropyl ether) (FR-720) particles in aqueous carrier, wherein the particles have $d_{50}$ smaller than 50 microns.

According to some embodiments, the formulation further comprises a dispersing agent.

According to some embodiments, the formulation further comprises a binding agent, wherein an amount of the binding agent is less than 25 weight percentages of the total weight of the formulation. In some embodiments, this amount of ranges from 5 weight percentages to 20 weight percentages of the total weight of the formulation.

According to some embodiments, the particles are characterized by $d_{90}$ smaller than about 100 microns.

According to some embodiments, the particles are characterized by $d_{10}$ smaller than about 10 microns.

According to some embodiments, the formulation is capable of forming a transparent film on a glass substrate.

According to some embodiments, the formulation further comprises a smoldering suppressant agent. In some embodiments, this smoldering suppressant agent is an aluminum ammonium super phosphoric acid salt (AIASP). In some embodiments, the ratio between the smoldering suppressing agent and the FR-720 particles ranges from about 1:5 and 5:1 , more preferably from about 1:1 and 1:3.

According to some embodiments, the formulation further comprises a flame retardant synergist.

In one embodiment, the formulation comprises AIASP and the synergist is antimony oxide (ATO). In this case, the molar ratio between the elemental antimony in the ATO and the elemental halogen in the FR-720 is less than 1:3.

In some embodiments, the formulation is in a form of an aqueous dispersion. More preferably, the particles are homogeneously dispersed in the dispersion.

According to some embodiments, the formulation comprises FR-720 in an amount of between 5 weight percents to about 70 weight percents, an acrylic binder in an amount of between 5 weight percents to about 50 weight percents, antimony oxide in an amount of up to about 40 weight percents, and water. In some embodiments, the formulation further comprises AIASP in an amount of up to 70 weight percents.

According to some embodiments, the formulation is characterized by a viscosity that ranges from about 100 centipoises to about 2000 centipoises.

According to another aspect of embodiments of the invention there is provided a flammable textile fabric, being coated by a flame retardant film, formed upon applying the formulation comprising tetrabromobisphenol A bis(2,3-dibromopropyl ether) (FR-720) particles as described herein.

The phrase "flammable textile fabric", as used in the context of this aspect of embodiments of the invention, describes a flammable textile fabric that is coated by a FR film, and hence is also referred to hereinafter as "coated flammable textile fabric" or "treated flammable textile fabric".

According to some embodiments of the invention, the film is formed upon applying any of the formulations described herein onto the fabric, and curing the formulation.

According to some embodiments, the coated flammable textile fabric is characterized by at least one aesthetical or textural property which is substantially the same as that of the flammable textile fabric per se.

According to some embodiments, the flammable textile fabric, as well as the coated flammable textile fabric, is a colored textile fabric.

According to some embodiments, the flame retardant film coating the flammable textile fabric has a durability of at least 15 washing cycles.

According to some embodiments, the coated flammable textile fabric described herein is characterized by a relative standard deviation (RSD) of average bromine content, as defined by a gridline-12-samples-test, which is smaller than 15 %, wherein the average bromine content is calculated upon cutting the fabric into twelve equal slices, each weighing about 0.5 gram, separately measuring the bromine content of each slice, and calculating the RSD of the separate bromine content values.

According to some embodiments, the coated flammable textile fabric is characterized by an after flame time, as defined by ASTM D-6413 12 seconds ignition test, of less than 5 seconds.

According to some embodiments, the coated flammable textile fabric is characterized by an after glow time, as defined by ASTM D-6413 12 seconds ignition test, of less than 150 seconds, preferably of less than 50 seconds.

According to some embodiments, the coated flammable textile fabric is characterized by a char length, as defined by ASTM D-6413 12 seconds ignition test, of less than 15 centimeters, preferably of less than 5 centimeters.

According to yet another aspect of embodiments of the invention there is provided a process of preparing the flame retardant formulation described herein, the process comprising:

mixing tetrabromobisphenol A bis(2,3-dibromopropyl ether) (FR-720) particles having a d50 that is larger than 50 microns, with an aqueous carrier,
and milling the dispersion until:

a) the FR-720 particles have $d_{90}$ which is smaller than about 100 microns; and/or
b) the FR-720 particles have $d_{50}$ which is smaller than about 50 microns; and/or
c) the FR-720 particles have $d_{10}$ which is smaller than about 10 microns

According to some embodiments of the invention, the milling is conducted for at least 10 minutes.

According to some embodiments, this process further comprises, either before or after the milling, adding at least one additive selected from the group consisting of a flame retardant synergist, a smoldering suppressant agent, a surface active agent, an antifoaming agent, a preservative, a stabilizing agent, a binding agent, a thickening agent, a wetting agent, a dispersing agent, a suspending agent, a pH buffer and any mixture thereof; and optionally adding more liquid (e.g., aqueous)carrier.

According to still another aspect of embodiments of the invention there is provided a process of applying the flame retardant formulation described herein onto a flammable textile fabric, the process comprising:

contacting the flammable textile fabric with the flame retardant formulation described herein, so as to obtain the flammable textile fabric having the flame retardant applied thereon; and
heating the flammable textile fabric having the flame retardant applied thereon.

According to some embodiments of the invention, the heating is conducted at a temperature of between 140°C and 180°C.

According to some embodiments, the contacting is effected by spreading, coating, padding, dipping, printing, foaming and/or spraying.

As used herein the term "about" refers to $\pm$ 10 %.

The terms "comprises", "comprising", "includes", "including", "having" and their conjugates mean "including but not limited to".

The term "consisting of means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The words "optionally" or "alternatively" are used herein to mean "is provided in some embodiments and not provided in other embodiments". Any particular embodiment of the invention may include a plurality of "optional" features unless such features conflict.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein the term "method" refers to manners, means, techniques and procedures for accomplishing a given task including, but not limited to, those manners, means, techniques and procedures either known to, or readily developed from known manners, means, techniques and procedures by practitioners of the chemical art.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

FIGs. 1A-B present plots showing the particle size distributions of a FR-720 dispersion before milling (as the volume percentage versus particle size, FIG. 1A) and of a wet-milled dispersion (as the volume percentage versus particle size, FIG. 1B), obtained by a Malvern Mastersizer 2000G;

FIGs. 2A-F present comparative optical microscope micrograph images of a film comprising FR-720, acrylic binder and Antimony Oxide (ATO, FIG. 2A), FR-720 only (FIG. 2B), FR-720 and ATO (FIG. 2C), FR-720 and acrylic binder (FIG. 2D), acrylic binder only (FIG. 2E) and of acrylic binder and ATO (FIG. 2F);

FIGs. 3A-B present scanning electron microscopy (SEM) images of a polyester fabric treated with a milled FR-720 formulation, according to some embodiments of the invention (FIG. 3A), and an Energy Dispersive X-ray Spectra (EDS) of the surface displayed in FIG. 3A (FIG. 3B);

FIGs. 4A-C present SEM images of a polyester fabric treated with a milled FR-720 formulation (formulation no. 2A), after curing, at x100 magnification (FIG. 4A), at x200 magnification (FIG. 4B) and at x400 magnification (FIG. 4C);

FIGs. 5A-C present SEM images of a polyester fabric treated with a milled FR-720/acrylic binder formulation (formulation no. 4A), before curing, at x100 magnification (FIG. 5A), at x200 magnification (FIG. 5B) and at x400 magnification (FIG. 5C);

FIGs. 6A-D present SEM images of a polyester fabric treated with a milled FR-720/acrylic binder formulation (formulation no. 4A), after curing, at x100 magnification (FIG. 6A), at x200 magnification (FIG. 6B) and at x400 magnification (FIG. 6C), further presenting a back-scattered image of FIG. 6B (FIG. 6D);

FIGs. 7A-C present scanning electron microscopy (SEM) images of a polyester fabric treated with a non-milled FR-720 formulation (formulation no. 2B) after curing, at x100 magnification (FIG. 7A), at x200 magnification (FIG. 7B) and at x400 magnification (FIG. 7C);

FIGs. 8A-C present SEM images of a polyester fabric treated with a non-milled FR-720/acrylic binder formulation (formulation no. 4B), before curing, at x100 magnification (FIG. 8A), at x200 magnification (FIG. 8B) and at x400 magnification (FIG. 8C); and

FIGs. 9A-D present SEM images of a polyester fabric treated with a non-milled FR-720/acrylic binder formulation (formulation no. 4B), after curing, at x100 magnification (FIG. 9A), at x200 magnification (FIG. 9B) and at x400 magnification (FIG. 9C), further presenting a back-scattered image of FIG. 9B (FIG. 9D).

DESCRIPTION OF SPECIFIC EMBODIMENTS OF THE INVENTION

The present invention, in some embodiments thereof, relates to the field of flame-retardants and, more particularly, but not exclusively, to novel flame retardant formulations that form homogeneous flame retardant films on textiles, their preparation and flame-retarded textile fabrics which comprise these films.

It has now been found by the inventors of the present invention that FR-720 can be processed to obtain a novel flame retardant formulation comprising FR-720 particles in a liquid carrier, wherein the particle size of at least 50% of these particles ($d_{50}$) is smaller than about 50 microns. This formulation has been successfully applied on a variety of substrates using low binder content, and resulted in a transparent and homogeneous film being formed in or on the treated substrates. A variety of white as well as colored textile fabrics coated by this film were characterized by a high degree of coating homogeneity, a high bromine content and a high transparency, while successfully passing the strict 15-seconds-ignition textile flammability test and possessing a durability of at least 15 washing cycles.

Thus, according to one aspect of embodiments of the invention, there is provided a flame retardant formulation comprising tetrabromobisphenol A bis(2,3-dibromopropyl ether) (FR-720) particles in an aqueous carrier, wherein the particles have $d_{50}$ which is smaller than about 50 microns.

The phrase "$d_{50}$" as used herein represents the particle size which 50 % of the particles do not exceed. As is widely acceptable in the art, the term "size" represents the particle radius of the particles of a given FR, and is typically determined by conventional analytical techniques such as, for example, microscopic determination utilizing a scanning electron microscope or by means of a laser granulometer (such as a small angle scattering, for example, a Malvern). The volumetric distribution of the sample relates to the weight distribution. While the $d_{50}$ particle radius is derived from a volumetric particle size or length and expresses the same values, this phrase is also referred to interchangeably herein and in the art as "volumetric average particle size", "volumetric average particle length" and "average particle length". Similarly, $d_{90}$ is defined as the particle size which 90% of the particles do not exceed and d10 is defined as the particle size which 10% of the particles do not exceed.

In some embodiments, the formulation described herein is prepared by milling a coarse dispersion of FR-720 particles. Exemplary milling techniques suitable for use in the context of embodiments of the invention are provided in detail below.

A coarse dispersion of FR-720 that can be transformed upon milling to the formulation of the present invention is typically characterized by an upper "cut-off' of the particle size (largest particle size) which is about 25,000 microns, preferably a cut-off ranging from about 1500 microns to about 2500 microns and/or by a $d_{90}$ ranging from about 100 microns to about 1000 microns and/or by a $d_{50}$ ranging from about 50 microns to about 500 microns and/or by a $d_{10}$ ranging from about 10 microns to about 100 microns. Such a FR-720 coarse dispersion is available by adding FR-720 in small portions to a liquid carrier, optionally adding a dispersing agent, and mixing for at least 10 minutes.

The formulation described herein, obtainable by wet milling the FR-720 coarse dispersion described above, is characterized by a "cut-off' of the particle size which is lower than 550 microns and by a $d_{50}$ which is lower than 50 microns. Preferably, the $d_{50}$ ranges from about 5 microns to about 30 microns, more preferably the $d_{50}$ ranges from about 8 microns to about 25 microns.

Furthermore, the formulation described herein, obtainable by wet milling the FR-720 coarse dispersion described above, is characterized by a $d_{90}$ which is lower than 100 microns. Preferably, the $d_{90}$ ranges from about 20 microns to about 80 microns, more preferably the $d_{90}$ ranges from about 30 microns to about 45 microns.

Furthermore, the formulation described herein, obtainable by wet milling the FR-720 coarse dispersion described above, is characterized by a $d_{10}$ which is lower than 10 microns. Preferably, the $d_{10}$ ranges from about 1 micron to about 10 microns, more preferably the $d_{10}$ ranges from about 1.5 microns to about 5 microns.

Indeed, as can be seen in the Examples section below, the milled FR-720 dispersion was characterized to have a $d_{90}$ of 38-39 microns, a $d_{50}$ of 12.6-14 microns and a $d_{10}$ of 2.6-3 microns.

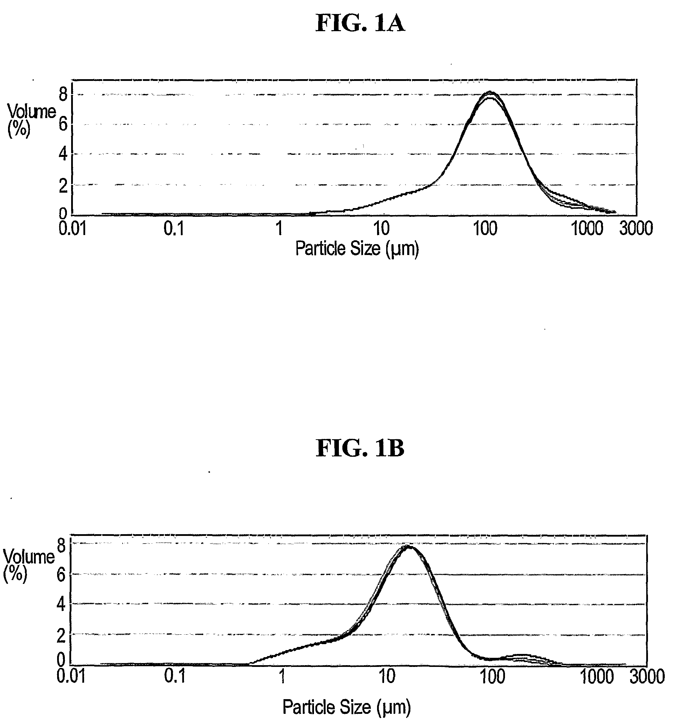

Illustrative particle size distribution functions of the coarse FR-720 starting material dispersion and of the formulation described herein can be seen in Figures 1A and 1B, and in Tables 1 and 2, respectively.

According to an embodiment of the invention, the formulation described herein further includes a dispersing agent (also termed herein interchangeably as a "suspending agent" or "thickening agent"). The use of a dispersing agent contributes to the stability and homogeneity of the FR-720 formulation. The dispersing agent is most preferably introduced to the FR-720 coarse dispersion starting material before the milling step.

Examples of dispersing agents and/or suspending agents and/or thickening agents that are suitable for use in the context of the present embodiments include, but are not limited to, acrylic acids, acrylic acids ester copolymer neutralized sodium polycarboxyl such as naphthalene sulfonic acid-formaldehyde condensate sodium salt, alginates, cellulose derivatives and xanthan.

If present, the dispersing agent is added in an amount ranging from 0.5 weight percentages to 5 weight percentages of the total weight of the formulation.

Preferably, the dispersing agent is selected from the group consisting of Dispergator WA, AMP-95, Clorocontin NGD and Triton X-100®. Further preferably, the dispersing agent is a nonionic surface active agent, such as Triton X100®.

According to some embodiments of the invention, the formulation described herein further includes a binding agent (also termed herein interchangeably as a "binder"). The use of a binder contributes to the adherence of the molecules of a flame retardant, herein the FR-720, to the substrate, herein the textile fabric.

As discussed in detail hereinabove, brominated FRs are known as typically requiring a large amount of a binder to affix them to the textile substrate, which may typically reach about 50 % by weight of the total FR formulation [Mischutin (1978) *supra*]. Such a large amount of a binder results in high add-on, which, as is further discussed in detail hereinabove, is undesirable since it causes a deterioration of the textile properties, for example, resulting in a stiffening of the fabrics or fading of their shades, and may further lower the tear strength and abrasion properties of the fabric. Unfortunately, the high binder content also contributes in itself to flammability and dripping.

It has now been uncovered by the present inventors that the formulation described herein can be effectively applied on various substrates in the presence of relatively low concentrations of a binder.

While the exact amount of binder used depends on the flame retardant's concentration, as well as on the fabric type onto which the formulation is to be applied, it has been shown that in the case of various textile substrates, the concentration of the binding agent in the formulations described herein can be lower than 25 weight percents of the total weight of the formulation, and even lower than 20 weight percents of the total weight of the formulation. As is demonstrated in the Examples section that follows, it was found that milled FR-720 formulations containing 15 weight percents of a binder were well adhered to the substrates, and remained such even upon subjecting the substrate to as much as 15 washing cycles, while maintaining the flame resistance properties. Thus, for example, it has been demonstrated that a cotton fabric having a milled FR-720 formulation that contains 15 % by weight of a binder applied thereon, passed a 12 seconds ignition test (ASTM D 6413) with an after flame time of 2 seconds, an after glow time of 113 seconds, and a char length of 4.5 centimeters, even after 15 cycles of washing (see, Example 11). In another example, it has been demonstrated that a cotton fabric having a milled FR-720/ ammonium phosphate formulation that contains 15 % by weight of a binder applied thereon, passed a 12 seconds ignition test (ASTM D 6413) with an after flame time of 0 seconds, an after glow time of 33 seconds, and a char length of 14.5 centimeters, even after 15 cycles of washing (see, Example 12).

Thus, according to some embodiments, the concentration of the binder is less than 25% by weight, and preferably ranges from 5 % to 20 % by weight.

The binder used in the formulations described herein is chosen to be compatible with the flame retardants and the additional additives in the formulation and depending on the specific application.

Preferably, when the formulations described herein are applied on textiles, the binder selected is suitable for use on textiles, and is therefore selected to be both non-damaging to the aesthetical and textural properties of the fabric, and durable (to washing, drying, UV light etc.).

Representative examples of binders that are suitable for use on textiles include, without limitation, acrylates, polyurethanes, and PVC. Preferably, the binder used in the formulations described herein is an acrylate.

Examples of acrylates that are suitable for use as binders in the context of the present invention include, but are not limited to, 2-phenoxyethylacrylate, propoxylated 2 neopentyl glycol diacrylate, polyethylene glycol diacrylate, pentaerythritol triacrylate, 2-(2-ethoxyethoxy) ethyl acrylate, butyl acrylate, styrene, and others.

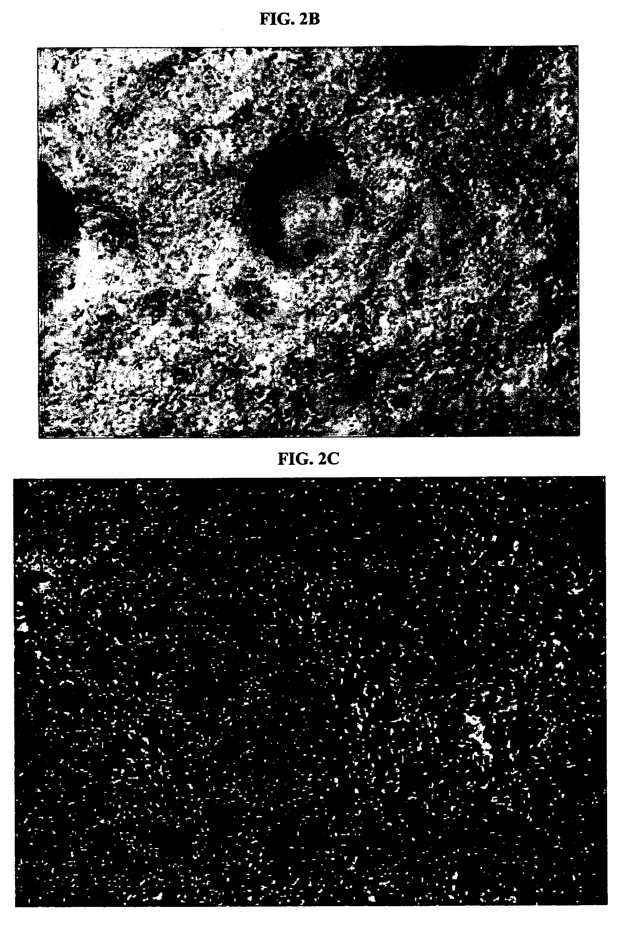

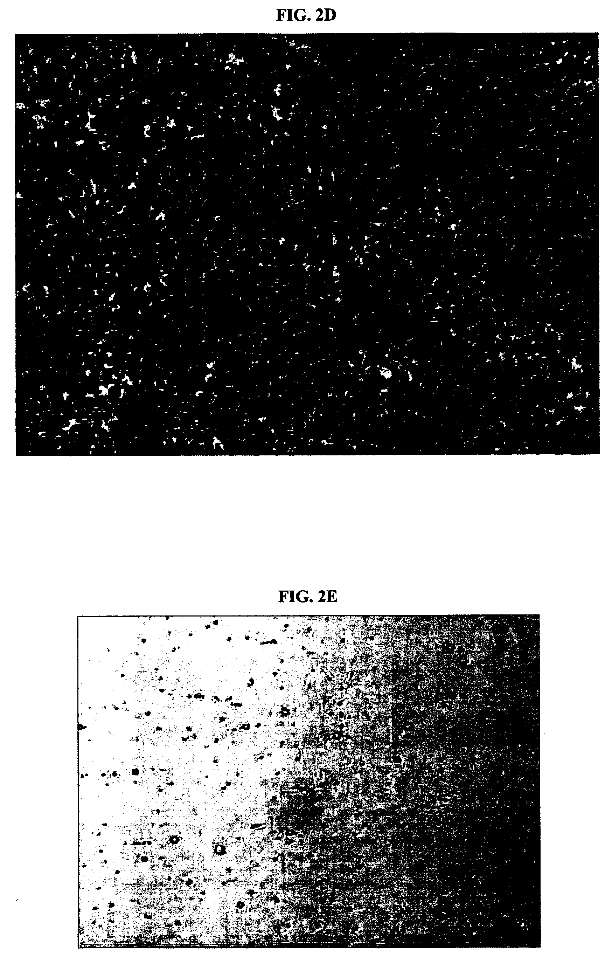

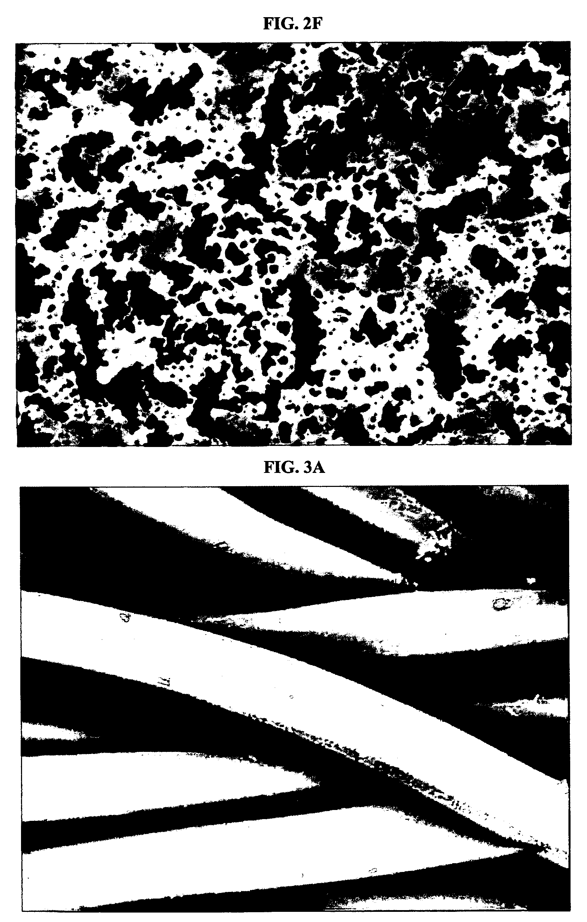

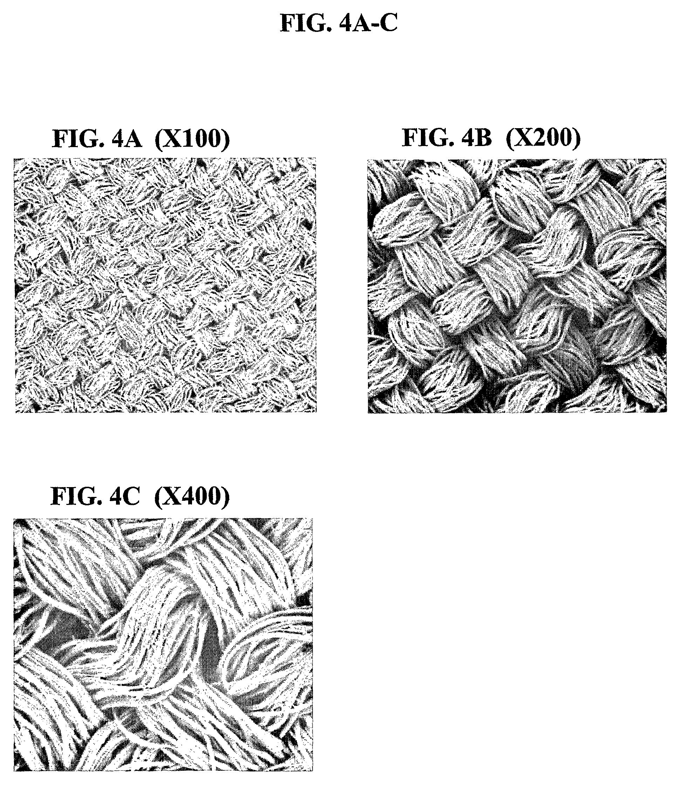

It is noted that the present inventors have now also successfully prepared stable formulations containing no binder at all. For example, Example 5 in the Examples section that follows, presents a formulation of milled FR-720 only (formulation 2A) and a formulation of milled FR-720 and ATO (formulation 3) only. The film prepared of FR-720 only (film no. 2A) appeared to be transparent and uniform, as can be seen in Figure 2B and had a very low turbidity (9.41 NTU, Table 6, Example 8). Furthermore, a fiber coated by formulation 2A appeared to be very homogenously, smoothly and completely coated by the fibers. In addition, the flame retardant particles were observed even deep in the yarn core. As seen in Figures 4A-C, no significant clumps or inter yarn adhesions were observed.

Thus, according to an alternative embodiment of the present invention, the formulations of the present invention are free of a binder.

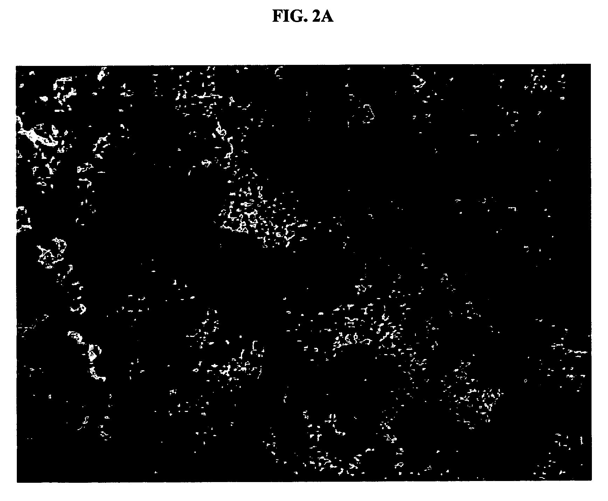

As shown in the Examples section hereinbelow, the milled FR-720 particles of the present embodiments were homogeneously dispersed, with or without the acrylic binder, in the dispersion, thereby rendering the film formed thereof to be transparent, as shown in Figures 2A-F for the films described in Example 8 hereinbelow.

Thus, according to a preferred embodiment of the invention, there is provided a formulation of the FR-720 particles described hereinabove capable of forming a transparent film on a substrate.

As used herein, the term "transparent" or "transparency" shall be distinguished from the term "translucent" or "translucency." A transparent material is characterized by its ability to convey images therethrough. A translucent material conducts light, but does not permit viewing of images therethrough.

The term "film" as used herein refers to a coating having a thickness which is substantially thinner compared to the thickness of the substrate which is coated by this film. The thickness of the coating is preferably, though not necessarily, essentially uniform over the surface of the substrate. The use of the term "film" includes not only films, but sheets as well. The thickness of the coating can assume any value, with the only possible limitations being those present from processing limitations.

The FR formulation described herein therefore enables to maintain the visual properties of the substrate on which it is applied. It has indeed been shown in the Examples section which follows, that a film formed by applying a thin coating of the formulations of the present invention, is highly transparent and has a low turbidity value. For example, the film prepared of FR-720 only (film no. 2A in Table 7) was highly transparent and had a low turbidity of less than 10 NTU (1.37 NTU). Furthermore, microscopic image analysis also indicated that this film was transparent and uniform (Figure 2B).

The transparent features of embodiments of the invention minimize or eliminate the visibility of the coating or film applied on the treated substrate. This may be particularly significant in flame retardation of colored fabrics. As shown in the examples section which follows, the milled FR-720 formulations presented herein were successfully applied on a variety of colored fabrics (see, for example, Examples 13-15). Therefore, the FR-720 formulations presented herein can be used to coat fabrics even in highly visible applications, such as in the coating of cloths, and even in the coating of dark colored cloths. Furthermore, given the improved qualities of the milled FR-720 formulations presented herein, the processing of these formulations is easier and less detrimental to the industrial equipment due to the formation of highly dispersed formulations.

The flame retardant film presented herein is especially suitable for application to textiles, since it is has flame-retardant properties, is transparent, relatively flexible and essentially evenly spread on a variety of fabrics. Furthermore, these properties are maintained even after many washing cycles (at least 15 cycles).

The ability of the formulations presented herein to form transparent films can be conveniently determined either visually or with the aid of a microscope. For example, the formulations were applied upon a glass substrate, such as on a glass microscope slide, or on a glass turbidimeter bottles, as can be seen in Figures 2A-2F. Figure 2B depicts the milled FR-720 formulation and shows a transparent molten film. The transparency of this film on glass can then be correlated to the homogeneity of the film or coating of the same formulation on a textile fabric and thus, the properties of these films are indicative of the effect of the formulations of the present embodiments on other substrates, such as fabric.

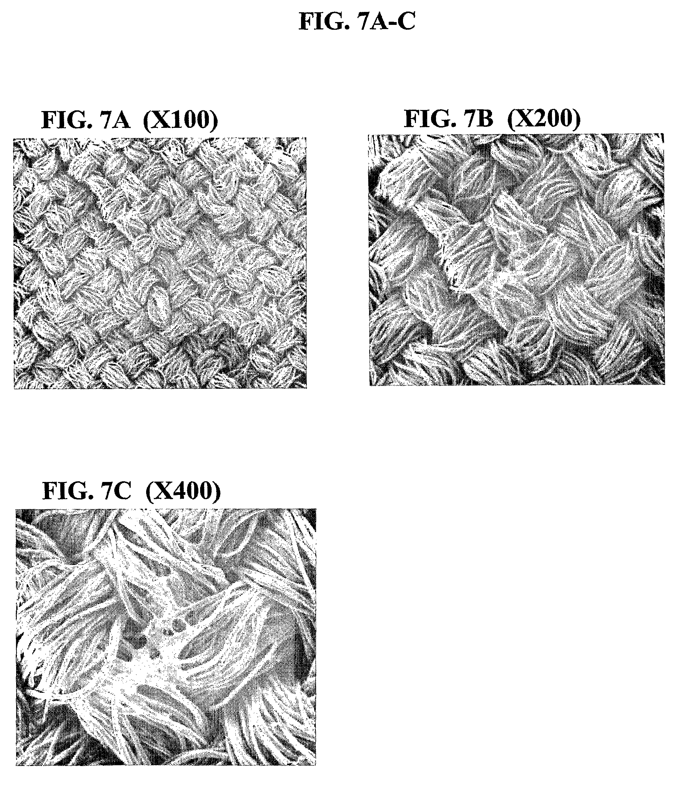

Indeed, SEM pictures showing the fabrics treated by milled FR-720 formulations versus by formulations of non-milled FR-720, showed considerable differences. Thus, for example, Figures 7A-C (Example 10) depict a polyester fabric sample treated and cured by a formulation containing only a dispersion of a non-milled FR-720 particles (formulation 2B in Table 4 below) and show the existence of non-melted FR-720 particles as well as the formation of FR-720 agglomerates between the fibers. Furthermore, the melt was non-uniform, did not evenly cover the fibers and inter yarn adhesions were observed. In contrast, in a parallel sample formed of a formulation comprising milled FR-720 particles (formulation 2A in Table 4 below), the coating appeared as a very homogenously FR-720 melt spread on the fabric, which smoothly and completely coated the fibers and was observed even deep in the yarn core. No significant clumps or inter yarn adhesions were observed (Figures 4A-C, Example 9).

The term "yarn", as used herein, refers to a strand or a bundle of textile fibers.

Thus, according to embodiments of the invention, the formulation described herein is capable of forming a transparent film on a glass substrate.

In each of the formulations described herein, the amount of the flame retardant can range from about 1 weight percent to about 70 weight percents of the total weight of the formulation. Preferably, the amount of the FR-720 flame retardant ranges from about 5 weight percents to about 70 weight percents, depending on the required bromine content on the fabric. More preferably, this amount ranges from about 5 weight percents to about 50weight percents, and in the presently most preferred composition that amount of the FR-720 is about 5-30 weight percents of the total weight of the composition.

In addition to the milled FR-720 as a flame retardant, the liquid carrier and optionally the dispersing agent and/or the binder, the formulations described herein may further comprise additional ingredients which may improve the performance of the formulation. Thus, in one embodiment, the milled FR-720 formulations can further comprise one or more of additional flame retardants, flame retardant synergists and smoldering suppressants.

As used hereinafter the term "smoldering", also known in the art as "after flame burning" or "after glow" refers to a burning which continues after the open flame has been extinguished. The phrase "smoldering suppressant", which is also referred to herein interchangeably as "smoldering suppressing agent" or "SS", therefore describes a compound or a composition which reduces or eliminates the tendency of a substance to burn after no longer being exposed to a flame.

Some of the presently known flame retardants may also exert smoldering suppression and are therefore further referred to as smoldering suppressants.

Formulations containing flame retardants and smoldering suppressants and/or flame retardants which are also smoldering suppressants can serve as flame retardant and smoldering suppressing formulations.

The flame retardants and smoldering suppressants added to the formulations described herein can be either halogenated flame retardants or non-halogenated flame retardants. Preferably, in cases where the FR formulation is intended to be applied on a textile fabric, the added flame retardants and smoldering suppressants are selected suitable for use on textiles.

Any flame retardants and smoldering suppressants can be used along with the milled FR-720 formulations presented herein, as long as upon application thereof, the coating shall remain homogeneous and/or transparent as required.

Examples of suitable smoldering suppressants include, but are not limited to urea, melamine and phosphate salts. In one embodiment, the smoldering suppressant is an ammonium phosphate.

The phrase "ammonium phosphate" refers to an ammonium salt of a phosphate, whereby the phosphate can be a monophosphate, a diphosphate or a polyphosphate. Preferably, the phosphate is a polyphosphate. Most preferably, the polyphosphate is a superpolyphosphate, such as aluminum ammonium super phosphate (AIASP).

As shown in the Examples section which follows, adding up to 70 weight percents of AIASP, but as low as 1 weight percent of AIASP was sufficient to decrease the "after-glow" of the treated fabric in a satisfactory extent (see, Examples 6 and 12).

According to some embodiments, the ratio between the smoldering suppressing agent and the FR-720 ranges from about 1:5 and 5:1. In some embodiments, this ratio ranges from about 1:1 to about 1:3.

In addition to the milled FR-720, the liquid carrier and optionally the binder, the dispersing agent or any of the other additives mentioned hereinabove, the formulations described herein may further comprise additional ingredients which may improve the flame retardancy performance of the formulation. An exemplary ingredient is a flame retardant synergist, which acts in synergy with the milled FR-720 and thus enhances the flame resistance properties of the formulation.

Thus, according to some embodiments, the formulation described herein further comprises at least one fire retardant synergist. An exemplary fire retardant synergist which is suitable for use in this context of the present invention is antimony oxide (ATO), being, for example $Sb_2O_3$ and/or $Sb_2O_5$.

As is detailed in the Background section hereinabove, when a FR formulation is applied on textiles, large amounts of ATO are undesirable due to cost, toxicity, color, environmental concerns and increase in the total add-on. Hence, lower amounts of a FR synergist, as compared to the presently known FR formulations, are required so as to maintain efficient flame retardancy, washing fastness and desirable fabric properties.

It has now been shown that the molar ratio between the fire retardant synergist and FR-720 can range from about 1:1 to about 1:10, and even from about 1:3 to about 1:6. Thus, the need to use large amounts of a FR synergist such as ATO is circumvented due to the relatively enhanced binding of the milled FR-720 to the substrate, and thus the resulting relatively high FR content on the substrate (over 17% of bromine on fabric, compared to about 10% in the non-milled formulation).

In particular, it has been shown that by using AIASP as a smoldering suppressant, in admixture with the milled FR-720 of the present embodiments, the amount of synergist can be further lowered, from a bromine : antimony ratio of 1: 3 (as in Table 3) to a ratio of about 1:6 (as in Table 5), without adversely affecting the flame resistance of the formulation. This of course is most advantageous due to the high cost of the ATO.

Thus, according to some embodiments, the molar ratio between the flame retardant synergist and the FR-720 flame retardant in the formulations described herein ranges from about 1:1 to about 1:6 of the active atoms in each compound (antimony and the halogen, respectively).

Furthermore, according to other embodiments of the invention, when the formulation comprises AIASP and the synergist is antimony oxide (ATO), the molar ratio between the elemental antimony in the ATO and the elemental halogen in the FR-720 is less than 1:3.

The milled FR-720 formulations described herein can further comprise additional ingredients that may stabilize the formulation, prolong its shelf-life and/or provide it with other desired properties such as certain viscosity, homogeneity, and adherence to the substrate.

Thus, according to some embodiments, the formulation may yet further comprise one or more of such additional ingredients. These include, for example, surface active agents, wetting agents, suspending agents, antifoaming agents, defoaming agents, preservatives, stabilizing agents, a pH buffer, binding agents, thickening agents and any mixture thereof.

Preferably, these additives are used in an amount of up to 10 weight percents of the total weight of the formulation.

The surface active agents and/or wetting agents can be nonionic and/or ionic (cationic or anionic) agents.

Examples of nonionic surface active and/or wetting agents that are suitable for use in the context of the present invention include, but are not limited to, polyoxyethylene (POE) alkyl ethers, preferably NP-6 (Nonylphenol ethoxylate, 6 ethyleneoxide units) such as DisperByk®101.

Examples of anionic surface active and/or wetting agents that are suitable for use in the context of the present invention include, but are not limited to, free acids or organic phosphate esters or the dioctyl ester of sodium sulfosuccinic acid.

Preferred formulations, according to some embodiments of the invention, comprise FR-720 in an amount of between 5 weight percents to about 70 weight percents, an acrylic binder in an amount between 5 weight percents to about 50 weight percents, antimony oxide in an amount of between 0 weight percent to about 40 weight percents, and water.

Furthermore, preferred formulations according to embodiments of the invention further comprise AIASP in an amount of up to about 70 weight percents.

As demonstrated in the Examples section which follows, milled FR-720 dispersions were found to be more viscous than non-milled FR-720 dispersions having the same FR concentration (amount), due to the larger surface area of the particles, facilitating further processing of these compositions.

Hence, preferred compositions according to some embodiments of the invention are characterized by a viscosity that ranges from about 100 centipoises to about 2,000 centipoises. As is demonstrated in the Examples section that follows, exemplary compositions were shown to have a viscosity in the range of from about 200 centipoises to about 1,700 centipoises. Compositions characterized by such a viscosity are highly advantageous since the relatively high viscosity circumvents the need to use large amounts of thickening agents when applying a formulation that contains the FR composition to substrates. As discussed hereinabove, large amounts of thickening agents, which are often required so as to efficiently apply low-viscosity FR formulations onto textiles, are highly disadvantageous due to their contribution to the general flammability of the substrate.

It was now surprisingly found that the addition of AIASP (Example 6), which is a smoldering suppressant agent, was useful also as a thickening agent, thus circumventing the need to add large amounts of polymeric or organic thickening agent. Typical increase in viscosity observed with addition of AIASP ranged from none to 5000 cps, depending on concentration. This effect obviates the need to add up to 5 weight percent thickener to the formulations.

Examples of defoaming and/or antifoaming agents that are suitable for use in the context of the present invention, include, but are not limited to, mineral oil emulsions, natural oil emulsions, and preferably are silicon oil emulsions, such as AF-52™.

Examples of preserving or stabilizing agents that are suitable for use in the context of the present invention, include, but are not limited to, formaldehyde and alkyl hydroxy benzoates; preferably the preserving or stabilizing agents is a mixture of methyl and propyl hydroxy benzoates.

Additionally, a salt (e.g., ammonium phosphate or a borate) or an oxide (e.g., sodium silicate, alumina oxide, alumina oxide, aluminum hydrate) and any mixture thereof, may be added to the formulations of the present invention.

The term "carrier", as used herein, refers to a liquid carrier and describes an inert material with which the composition is mixed or formulated to facilitate its application, or its storage, transport and/or handling. The liquid carrier can be, for example, an organic liquid carrier (e.g., alcohols, ketones, petroleum fractions, aromatic or paraffinic hydrocarbons, chlorinated hydrocarbons, or liquefied gases) or an aqueous carrier.

Since the flame retardant formulations described herein are particularly useful for the treatment of textiles, the liquid carrier is preferably a textile acceptable liquid carrier, which is an inert, preferably environmentally acceptable liquid carrier that is not harmful to the textile. Preferably, the liquid carrier is an aqueous carrier and more preferably the carrier is water.

The present inventors have now uncovered that an efficient application of FR-720-containing FR formulations, as presented herein, can be performed while utilizing an aqueous dispersion of milled FR-720. As is demonstrated in the Examples section that follows, formulations containing an aqueous dispersion of milled FR-720, either alone or in combination with flame retardant synergists or smoldering suppressant agents, are stable even during long-term shelving.

Thus, according to some embodiments of the invention, in each of the formulations described herein, the FR-720 is utilized in a form of a dispersion, which comprises FR-720 particles dispersed in the liquid carrier, wherein at least 50 % of these particles have a particle size which is smaller than about 50 microns. Preferably, the dispersion comprises FR-720 particles such that at least 50 % of these particles have a particle size ranging from about 5 microns to about 30 microns, more preferably ranging from about 8 microns to about 25 microns.

These dispersions are characterized by a homogeneous dispersion of the particles, as can be later manifested in the homogeneity of the bromine particles in the treated fabric. As can be seen in the Examples section which follows, a textile fabric coated by the milled FR-720 particles, according to some embodiments of the invention, has a high bromine content (>15%) and a low relative standard deviation of this value (lower than 15%), averaged over twelve separate and equal fabric specimens.

Thus, according to some embodiments of the invention there is provided a dispersion in which the particles of FR-720 are homogeneously dispersed.

While as described hereinabove, a preferred liquid carrier according to some embodiments is an aqueous carrier and more preferably it is water, preferred formulations -include an aqueous dispersion of milled FR-720.

Thus, according to another aspect of embodiments of the invention there is provided a process of preparing flame retardant formulations, which comprise an aqueous dispersion of FR-720. The process, according to these embodiments, is effected by providing and mixing a dispersion containing FR-720 coarse particles, namely particles having a $d_{50}$ which is larger than 50 microns, and even larger than 100 microns or 200 microns, and an aqueous carrier. Optionally, a thickening agent and/or a dispersing agent can be added at this stage. Any commonly used thickening agents and dispersing agents may be used. An exemplary thickening agent which was efficiently utilized in the preparation of FR-720 dispersions is carboxymethylcellulose (see, for example, Example 1 in the Examples section that follows); the mixed dispersion is then milled, to thereby obtain FR-720 particles dispersed in the solvent, such that the particle size of at least 50% of said particles ($d_{50}$) is smaller than about 50 microns.

Wet milling is defined as a milling step which is carried out in the presence of a liquid and can be conducted according to any of the known wet milling practices.

In particular, wet milling techniques comprise subjecting a liquid suspension of coarse particles to mechanical means, such as a dispersion mill, for reducing the size of the particle size. One example of a dispersion mill is a media mill, such as a bead mill. Wet bead milling involves preparing a suspension of pre-milled coarse particles. This dispersion is then drawn through a mill chamber containing a motor driven paddle and a quantity of grinding beads, to produce a finely milled suspension. A screen is used to retain the beads within the mill chamber whilst allowing the passage of product out of each mill chamber. Inline mixers may be used in the process line to break up milled/pre-milled agglomerates.

The mills used for wet milling commonly employ toughened ceramic, stainless steel or tungsten carbide to form the mill chambers and agitating paddles. Commonly used grinding media include zirconium oxide beads, which have a hardness approaching that of diamonds, or considerably softer grinding media based on polystyrene or other similar polymers.

Other wet milling methods, besides bead milling, include using roll mills, pearl mills, vibro-energy milling, high pressure water jets, ultrasonics and orifice extrusion methods.

It has been found that by using wet-milling, the disadvantages associated with dry milling FR-720 particles can be overcome, by avoiding, for example, undesired, melting of particles and/or formation of agglomerates, which may occur during dry milling due to the relatively low melting temperature of the FR-720 (113-117 °C)

In some embodiments, wet milling is performed in liquid media which do not dissolve the FR-720 particles and which are non-flammable Since FR-720 does not dissolve in water, it is preferable to conduct the wet milling in the presence of water

Milling media bodies useful for milling include balls, cylinders and other shapes of steel, corundum, porcelain, steatite, alumina, mixed oxides and quartz such as those having a diameter of from 0.05 to 20 mm It has been found to be preferable to use a large number of fine milling balls, rather than fewer heavy balls. The finer balls perform a more efficient co-milling action. Preferably the balls have a diameter of 2 mm or less, and even 1.5 mm or less, under laboratory conditions Larger milling balls may be required under industrial conditions.

Milling temperatures can be controlled for optimum performance of the media mill and brittleness of the milled solid and milling media, which can become more elastic and resistant to particle size reduction at higher temperatures. Milling temperatures can range from as low as liquid air, liquid nitrogen or liquid argon temperatures, but are more commonly from about - 80 °C to about 50°C, well below the melting temperature of the FR-720 particles being milled.

Milling is conducted under atmospheric pressure in laboratory conditions, but can be conducted under higher pressure in industrial conditions.

Preferably, the milling, under laboratory conditions, is conducted in a 0.6 liter continuous mill at a rate of 3-4 kg/hour, but higher rates are possible under industrial conditions, so as to achieve the desired FR-720 particle size distribution.

The milling time is determined such that the main dispersion properties are obtained. In other words, milling is conducted until the particle size of at least 90 % of said FR-720 particles ($d_{90}$) is smaller than about 100 microns and/or until the particle size of at least 50 % of said FR-720 particles ($d_{50}$) is smaller than about 50 microns and/or until the particle size of at least 10% of said FR-720 particles ($d_{10}$) is smaller than about 10 microns. Hence, the milling time is from about 10 minutes to about an hour under laboratory conditions Longer milling time is possible but not required

As is demonstrated in the Examples section that follows (see, for example, Example 1), when milling was conducted during such a time period, formulations comprising FR-720 particles having the desired $d_{50}$ of less than 50 microns, as well as a desired, relatively narrow, particles size distribution, were obtained. For example, comparing the particles size distribution before and after the milling of FR-720 particles (see, for example, Figure 1A and Table 1, versus Figure 1B and Table 2, respectively), shows that after milling, the size distribution is narrower and has a higher ratio of micron-sized particles: the "cut-off" of the particle size was lowered from about 2100 microns before milling to less than 550 microns, and even 470 microns after milling; the $d_{90}$ was lowered from above 100 microns, to a $d_{90}$ which is below 100 microns, preferably between about 20 microns to about 80 microns, even more preferably between about 30 microns to about 45 microns; the $d_{50}$ was lowered from above 50 microns to well below 50 microns, preferably between about 5 microns to about 30 microns, even more preferably between about 8 microns to about 25 microns; Similarly, the $d_{10}$ was lowered from above 10 microns, to a $d_{10}$ which is below 10 microns, preferably between about 1 micron to about 10 microns, even more preferably between about 1.5 microns to about 5 microns.

Without being bound to a specific theory, it is thought that achieving a particle size which is smaller or equal to the average diameter of the fibers of the flammable fabric, positively affects the FR finish transparency and smoothness.

The obtained milled dispersion was smooth and uniform and formed an easy to apply and/or process milling base, which is also termed hereinafter a "concentrate". The concentrate, containing about 40 % solids, was non-gritty and had the FR homogeneously dispersed within, and maintained stable for about 1 day before phase separation occurred. The stability was increased by adding suitable stabilizers, dispersants and/or thickeners, as detailed hereinbelow.

This milling base or "concentrate" is convenient to use and can be sold "as is" to the end-user, who can then create the final formulation, according to his/her exact needs, just before using the product. Furthermore, the amount of solids in the concentrate can be modified, based on the required properties of the product (for example, a required viscosity), by decantation (under laboratory conditions) and/or by controlling the solvent amount in the pre-milled dispersion. For example, the formulation shown in Table 3 had 37.7 % solids, while the formulation of Table 4 (No. 1 therein) had as much as 58 % solids.

Alternatively, additional components are added by the manufacturer such that the obtained complete formulation is the final product, rather than the concentrate. For example, as shows Example 3 hereinbelow, the FR-720 concentrate, prepared according to Example 1, was redispersed in water adding additional components, such as ATO, binder and dispersants, and the resultant formulation passed the flammability tests (see Example 11) and evenly coated the fabric (as shown in Figures 3A-B).

According to another embodiment of the process according to this aspect of the present invention, prior to or subsequent to the milling, there is added to the dispersion at least one ingredient selected from the group consisting of a flame retardant synergist, a smoldering suppressant agent, a surface active agent, an antifoaming agent, a preservative, a stabilizing agent, a binding agent, a thickening agent, a wetting agent, a dispersing agent, a suspending agent, a pH buffer and any mixture thereof, as described hereinabove. It may be necessary at this stage to add more of the aqueous carrier/solvent.

These formulations can be efficiently used when applied on textiles, avoiding the need to use excessive amounts of the flame retardant, binders, synergists and other additives. Furthermore, these formulations are easily applied onto the textile substrate, while circumventing the need to use drastic conditions as in the methods for incorporating flame retardants in the melt (i.e. at high temperatures and under pressure, for example by extrusion or injection molding).

Thus, according to another aspect of embodiments of the invention there is provided a process of applying any of the flame retardant formulations described herein, to a substrate, preferably to a flammable textile fabric. The process, according to these embodiments, is effected by simply contacting the substrate with the flame retardant formulation, whereby the contacting can be effected by any industrially acceptable manner. Subsequent to contacting the FR formulation, the substrate is heated to a temperatures of from 140 °C to 180 °C, preferably at about 160 °C, whereby the temperature is dictated by the melting temperature of the FR-720 (113-117 °C) and by the curing temperature of the binder. The curing temperature is also related to the curing time and the treated substrate. Thus, for example, curing the present formulations on a glass substrate necessitated more time than on textiles at the same temperature (at 160 °C, 15 minutes on glass compared to 4-6 minutes on fabric).

The industrially acceptable manner in which the contacting is effected includes, for example, spreading, coating, padding, dipping, printing, foaming and/or spraying the FR formulation onto the substrate. Padding is a process that is typically used for applying the formulation on a textile substrate and is defined as a process in which the fabric is first passed through a padder containing the FR formulation, and is then squeezed between heavy rollers to remove any excess formulation. The process described herein can be effected, for example, either during the dying or the finishing stages of the substrate manufacture.

As is demonstrated in the Examples section that follows, the formulations and processes described herein were practiced so as to provide substrates having the milled FR-720 formulations applied thereon.

Hence, according to a further aspect of embodiments of the invention there is provided an article-of-manufacture which comprises a flammable substrate and any of the flame retardant formulations described herein, being applied thereon.

As used herein, the term "substrate" describes an article which has a surface that can be beneficially coated (either wholly or partially) with a flame retardant formulation. Exemplary articles include, without limitation, textiles, wood, furniture, toys, bricks, electrical appliances, electrical cables, plastics and more.

Preferred substrates onto which the flame retardant formulations described herein can be beneficially applied are textile fabrics. The textile fabrics can be synthetic, natural or a blend thereof. Non-limiting examples of textile fabrics that can be beneficially used in the context of the present invention include wool, silk, cotton, linen, hemp, ramie, jute, acetate fabric, acrylic fabric, latex, nylon, polyester, rayon, viscose, spandex, metallic composite, carbon or carbonized composite, and any combination thereof. Representative examples of textile fabrics which were shown to be suitable for use in the context of the present invention include, without limitation, cotton, polyester, acrylic fabric and combinations thereof.

The textile fabrics of this invention may be used as a single layer or as part of a multilayer protective garment.

A textile substrate may be incorporated in various products, where it is desired to reduce the substrate flammability. Such products include, for example, draperies, garments, linen, mattresses, carpets, tents, sleeping bags, toys, decorative fabrics, upholsteries, wall fabrics, and technical textiles.

It is noted that a large variance of the bromine content in or on the substrate is common in treated textiles and results in an uneven coating. For example, the side of the fabric may have different amounts of the FR compared to the interior parts of the fabric, and occasionally, parts of the fabric may have no coating at all or a very thin coating, compared to other parts thereof. Such an uneven distribution of the FR may mean that larger amounts of flame retardant have to be used, in order to ensure the covering of the entire substrate and obtaining the required flame resistance, at a cost of a further increase in the add-on and a decrease in the textural and/or aesthetical properties of the substrate.

However, as shown in the Examples section which follows, it has now been found that a flammable textile fabric coated by a film comprising the milled FR-720 particles as presented herein is homogeneous, for example in its bromine content, as is highly advantageous in terms of fabric uniformity, fabric appearance and fabric feeling.

Thus, according to another aspect of embodiments of the invention, there is provided a flammable textile fabric coated by a flame retardant film, wherein this film is upon applying any of the tetrabromobisphenol A bis(2,3-dibromopropyl ether) (FR-720) formulations described herein onto the fabric.

The flame retardant film is defined in detail hereinabove, and is formed upon applying any of the formulations described herein onto the fabric, and curing the formulation, as described hereinabove.

The phrase "substantially homogeneously dispersed in or on the fabric" describes a fabric having an even distribution of bromine particles therein or thereon. This even distribution is reflected by the variance in the bromine content in different parts of the fabric.

The bromine content on the fabric can be measured by numerous methods, for example, by extracting the brominated FR from the fabric and then titrating it with $AgNO_3$. Other methods include using an oxygen bomb, X-ray fluorescence and flame ionization chromatography.

Regardless of the specific method to determine the bromine content, in order to also determine the variance or gradient in bromine concentration throughout the fabric, it is necessary to conduct these measurements in a carefully planned manner, so as to obtain representative results of bromine content from different parts of the fabric. For example, a gridline-12-samples-test, as defined in the methods section hereinbelow, can be used such that the tested fabric is cut into twelve equal slices each weighing about 0.5 gram, the bromine content of each slice is separately measured and the average of these twelve separate slices is calculated.

The relative standard deviation (RSD) of average bromine content can then be a measure of the homogeneity of the coating on the fabric. It has been demonstrated herein that the RSD of the bromine content, measured using the gridline-12-samples-test, as described herein, was lowered from about 20 % for the fabric treated by a non-milled formulation, to about 11.5 % for the fabric treated by the milled formulation presented herein (see, Examples 9 and 10), a decrease of over 40 % in the RSD.

Thus, according to some embodiments of the invention, the flammable textile fabric having applied thereon the formulation presented herein in a form of a flame retardant film, is characterized by a relative standard deviation (RSD) of average bromine content, which is smaller than 15 %.

These results are also consistent with the SEM/EDS pictures of a polyester fabric treated with the milled FR-720 aqueous formulation, prepared as described in Example 3. For example, Figure 3A shows the even distribution of bromine on the fibers as evenly-spread dots on the fiber surface.

Furthermore, it has now been shown that the milled FR-720 particles are not only homogeneously dispersed in or on the fabric, but also that their total concentration on the fabric can be higher compared to a similar fabric coated by a similar formulation comprising non-milled FR-720 particles.

For example, a fabric treated by a milled FR-720 formulation was found to contain over 17 % of bromine incorporated therein, compared to only about 7 % of bromine in a fabric treated by the non-milled formulation, a 140 % increase in bromine content. It is important to note that while the initial bromine content in the formulations was similar in the milled and non-milled formulations (15.9 % bromine before milling, compared to 11.8-12.6 % bromine in Tables 3 and 5 below), the high bromine content in the final treated fabric reflects the better penetration of the FR-720 particles of the present embodiments, into the fabric, and is a unique characteristic of the formulations and articles presented herein.

This enhanced penetration, complemented by an enhanced homogeneous dispersion of FR-720 particles within the fabric, as described hereinabove, can also be observed in the SEM pictures of fabrics coated by the milled versus non-milled formulations. For example, as shown in Example 10 and Figures 7A-C, SEM pictures of a polyester fabric treated by the non-milled FR-720 formulation clearly showed a melt of big particles that has formed a brittle film between the fibers, many FR-720 particles that have not melted and the melt itself appeared to be non-uniform and did not evenly cover the fibers. Visually, the overall effect of this non-milled formulation is a translucent, rather than a transparent, coating. In contrast, as shown in Example 10, SEM pictures of a polyester fabric treated by the milled FR-720 formulation showed the even distribution of bromine on the fibers (Figures 3A-B), and further showed the molten FR-720 particles spread very homogenously on the fabric, completely coating the fibers, deep into the yarn core, with no significant clumps or inter yarn adhesions being observed (Figures 4A-C).

It is beneficial that the increased homogeneity, durability and flame resistance in the final treated fabric were obtained even though the amount of binder is as low as 15 % in the milled formulations, compared to over 30 % in presently known non-milled formulations of FR-720 (as described, for example, in WO 05/103361).

Thus, according to some embodiments of the invention, the flammable textile fabric having applied thereof the FR formulation presented herein n is characterized by an amount of a binding agent which is lower than 25 weight percents of the total weight of the substrate, preferably lower than 20 weight percents of the total weight of the substrate, and more preferably the amount of the binding agent ranges from 5 weight percents to 20 weight percents of the total weight of the substrate.

These low amounts of binder allowed the textiles treated by the formulations presented herein to maintain their desirable textural and aesthetical properties, as well as their flame retardancy, as compared to the untreated fabric.

In particular, it has been shown that textile substrates coated with the formulations described herein were characterized by feel and appearance similar to those of a non-treated fabrics. For example, properties such as the flexibility, smoothness and streak-free look of a non-treated textile were maintained upon application of the FR formulation. Furthermore, these textural and aesthetical properties were maintained also upon subjecting the treated fabrics to several washing cycles.

Thus, according to some embodiments of the invention, there is provided a flammable textile fabric having an FR formulation as presented herein applied thereon, which is characterized by at least one aesthetical or textural property which is substantially the same as that of said flammable textile fabric *per se.*

The phrase "flammable textile fabric *per se"* as used hereinafter, refers to a flammable textile fabric which was not treated with the flame retardant formulation.

One particularly important aesthetical property is the transparency of the coating. As shown in the Examples which follow, the formulations presented herein formed homogeneous and transparent coatings, for example on glass, as described hereinabove. When applied on the fabric, these coatings effectively penetrated the fabric fibers, evenly coating them, with no agglomerates or non-melted particles being observed therein. The transparency, smoothness and homogeneity of the coating allowed the treated fabric to maintain its color, as can be seen in a series of experiments measuring the CIE Lch color difference for a variety of colored fabrics treated by the formulations of the present embodiments, compared to a similar white fabric (see, Examples 13-15). For example, a 100 % black colored cotton twill treated by a milled-FR-720 formulation (see, Example 13,Table 7) had a relatively low dE value (1.37), signaling only a minor color change. A blue colored 50 % cotton/50 % polyester twill fabric treated by the same formulation (see, Example 14, Table 8) had a dE value of only 3.00, and a red brick colored 100 % acrylic plain weave fabric treated by this formulation (see, Example 15, Table 9) also had a low dE of 5.16.

The milled FR-720 formulations presented herein have proved to be highly efficient in creating a uniform, homogeneous and transparent coating, which is both high in bromine and low in binder, and is therefore highly suitable to be used not only on white and back-coated textiles, but also on colored textiles, for which the degree of transparency of the coating is more critical.

Thus, according to some embodiments of the invention, the invention is suitable to treat a wide selection of fabrics, and is particularly suitable to treat colored fabrics.

Furthermore, this treated flammable textile fabric is also characterized by a relatively low amount of binder, since the applied formulation contained less than 15 % binder of the total weight of the formulation.

As is used herein, the term "flammable substrate" describes a substrate, as described hereinabove, that easily ignites when exposed to a low-energy flame. The flammability of different articles-of-manufacture can be tested according to international standards. For example, the flame retardancy of the treated flammable substrates presented herein was determined by a 12 seconds ignition test, which is defined by ASTM D-6413, a test method used to measure the vertical flame resistance of textiles. According to this method a textile is classified on a pass/fail basis, according to predetermined criteria, usually of the "after-flame time", "after-glow time" and "char length" of the tested sample.

An "after-flame time" is defined herein and in the art as the time period during which the sample continues to burn after removal of the burner.

An "after-glow time" is defined herein and in the art as the time period during which the sample glows after the flame is extinguished.

A "char length" is defined herein and in the art as the distance from the edge of the fabric that was exposed to the flame to the end of the area affected by the flame. A char is defined as a carbonaceous residue formed as the result of pyrolysis or incomplete combustion.

More specifically, a textile is considered to have failed the 12 seconds ignition test, if its average "char length" exceeds 7 inches (17.8 cm) or an individual sample has a "char length" longer than 10 inches (25.4 cm). The flammability of a substrate may be further defined by its "after flame time" and by its "after glow time". A fabric is considered to have an excellent flame retardancy if either its "after flame time" is 10 seconds or less, or its "after glow time", is 200 seconds or less. A fabric is considered to have a superior flame retardancy if its "after flame time" is 5 seconds or less.

Using this method, it was demonstrated, for example, that a bone-dry 100 % cotton knitted fabric, which was padded with a milled FR-720 formulation (Example 11), according to preferred embodiments of the present invention, passed ASTM D-6413 12 seconds ignition test with an after flame time of 2 seconds, an after glow time of 113 seconds, and a char length of 4.5 centimeters.

Similarly, a bone-dry 100 % cotton knitted fabric, which was padded with a milled FR-720/AIASP aqueous formulation (Example 12), according to some embodiments of the invention, passed ASTM D-6413 12 seconds ignition test with an after flame time of 0 seconds, an after glow time of 33 seconds, and a char length of 14 centimeters.

As defined hereinafter the term "bone-dry" describes a substrate having zero percent moisture content.

The treated flammable textile fabrics described herein are therefore characterized by enhanced flame retardancy properties, which can be determined as described hereinabove.

Thus, the treated flammable textile fabrics according to the present embodiments are characterized by an after flame time of 5 seconds and less; an after glow time of 150 seconds or less, preferably of 50 seconds or less, and a char length of 15 centimeters or less, preferably of 5 centimeters or less.

As is further demonstrated in the Examples section that follows, when an FR formulations as presented herein was applied onto various textile fabrics, the flame resistance of the fabric, as defined by the "after flame time", "after glow time" and "char length", was obtained and maintained even after the fabric was contacted with hot water and a detergent, while being subjected to several washing cycles, as defined by Standard Laboratory Practice for Home Laundering (AATCC technical manual/2001). In fact, the flame resistance properties of textile fabrics treated with the FR formulations described herein were maintained even after the treated fabric was subjected to even 15 washing cycles.

Hence, it has been shown that the treated textile fabrics are characterized by enhanced washing fastness and that the treated flammable textile fabrics described herein have a durability of at least 15 washing cycles.

The term "washing fastness", which is also referred to herein interchangeably as "washing durability" or "laundry stability", refers to the ability of a substrate treated with the milled FR-720 formulations of the present invention, to maintain its characteristic flame resistance and/or textural and/or aesthetical properties, after being subjected to at least one washing cycle, as defined by Standard Laboratory Practice for Home Laundering (AATCC technical manual/2001).

As is well acceptable in the art, a textile is considered "durable" if it withstands 5 washing cycles without having remarkable change of a property thereof. The substrates treated with the formulations of the present embodiments were characterized by a washing fastness of 15 washing cycles. Hence, according to further embodiments of the invention, the treated flammable textile fabrics described herein are characterized by washing fastness. This feature is particularly notable in view of the relatively low amount of the binder in the applied formulation.

As discussed in the Background section hereinabove, textile flammability and textile smoldering are major concerns since textiles are used in all fields of life. Some textile-based articles of manufacture, such as garments, linen and some decorative or technical textiles, are subject to harsh usage (abrasion, exposure to various environmental conditions etc.) and therefore may need extensive, sometimes daily, cleaning and washing. Heretofore, fire proofing these articles of manufacture involved either using the few available non-flammable fabrics; coating flammable fabrics with large amounts of FR, thus often damaging the fabric properties; or applying low amounts of FR on the flammable fabric, but limiting its cleaning method to the expensive and burdensome dry cleaning method. Using the FR formulation presented herein, these garments or technical textiles may be fire proofed while maintaining the feel and look of the fabric, as a result of applying relatively small amounts of the formulation.

Other types of flammable textile fabrics, such as draperies, carpets, tents, sleeping bags, toys, wall fabrics, decorative fabrics, mattresses and upholsteries, are not washed as much as garments or linen. However, the major hazards that can be caused by the inherent flammability of these articles call for efficient fire proofing thereof, in addition to their durability during periodic cleaning. These articles of manufacture may easily be made fire proof, either by using a fabric treated by the formulation described herein during the manufacturing process, or by easily applying these formulations onto the final product.

As discussed in detail in the Background section above, commonly used brominated FRs are characterized by a high add-on, which then results in inferior textural and aesthetical properties.

As shown in the Examples section which follows, fabrics treated by the formulations presented herein were characterized by a combination of a low binder content and a high bromine content.

Thus, it has now been established that the milled FR-720 formulations presented herein can serve as efficient and durable flame retardant and that milled FR-720 particles can be incorporated in formulations that are beneficially applied onto flammable substrates such as textile fabrics, while overcoming the limitations associated with the high binder content of the presently known flame retardant formulations of FR-720.

Additional objects, advantages, and novel features of the present invention will become apparent to one ordinarily skilled in the art upon examination of the following examples, which are not intended to be limiting. Additionally, each of the various embodiments and aspects of the present invention as delineated hereinabove and as claimed in the claims section below finds experimental support in the following examples.

## EXAMPLES

Reference is now made to the following examples, which together with the above descriptions, illustrate the invention in a non limiting fashion.

### MATERIALS AND ANALYTICAL METHODS

#### Materials:

Tetrabromobisphenol A bis(2,3-dibromopropyl ether) (CAS No. 21850-44-2) was obtained from Ameribrom Inc.

as FR-720.

Antimony trioxide (ATO, CAS No. 1309-64-4) was obtained from Campine, Belgium.

Aluminum ammonium super phosphoric acid (AIASP) was prepared according to the procedure described in WO 07/096883.

Ammonium hydroxide was obtained from Aldrich.

Triton X100® or TERGITOL™XD (a nonionic dispersing agent) was obtained from DOW chemicals.

AC-200 W binder (a 45% solution) and acrylic thickening agent were obtained from B. G. Polymers.

### *Instrumental Data:*

Mixing was conducted using an IKEA lab mixer.

Viscosity was measured using a Bruckfield viscometer (model DV-E).

### *Size distribution tests:*

*Light scattering particle size measurement:* This method was used to determine the particle size distribution of liquid particles, using a Malvern Mastersizer (Hydrogel 2000G), manufactured by Malvern Instruments. The instrument uses the principle of MIE scattering, has an accuracy of $\pm$ 1 %, and is set to measure particles in the size range 0.02-2000 microns. A spherical (general) model was used. The surface mean particle size ($d_{50}$) or 50 percentile, the 10 percentile ($d_{10}$) and the 90 percentile ($d_{90}$) are directly obtained from the data generated by the instrument.

### *Film Characterization Methods:*

Film transparency was measured in two ways:

a) The interior walls of a glass turbimeter test bottle were coated by a thin layer of a tested formulation, forming a film on the inside wall of the bottle. The bottle was then cured at 160 °C for 15 minutes, and the turbidity was measured in a Turb555 turbimeter WTW), using empty bottles for calibration.

b) Microscope slides were dip-coated by a tested formulation, forming a film on the slide, which was then cured at 160 °C for 15 minutes. The cured coated slides were then examined using a Nikon eclipse model ME600 light microscope at X 75 or X 100 lens magnification.

### *Fabric Characterization Methods:*

Scanning electron microscope (SEM) equipped with an energy dispersive x-ray spectrometer (EDS; hereinafter SEM/EDS) was performed on a JEOL JSM-7400F ultrahigh resolution cold FEG-SEM. In this method a piece of fabric is coated with 10 nanometer of gold layer.

*The percentage of bromine on the fabric* was determined by adding tetrahydrofuran (THF) and extracting the coating from twelve fabric specimens (referred to hereinafter as the "gridline-12-samples-test") weighing 0.5 grams each (four specimens from the middle of the fabric and four from each the side of the fabric, as detailed below):

| 1 | 2 | 3 |
|---|---|---|
| 4 | 5 | 6 |
| 7 | 8 | 9 |
| 10 | 11 | 12 |

Each specimen is reacted with a sodium biphenyl complex reagent, to produce NaBr in an amount equivalent to the amount of bromine in the sample. The access reagent is treated with isopropanol and acidified with acetic acid. Finally, the amount of bromine is determined using a titration with $AgNO_3$.

*The relative standard deviation (RSD)* is a measure of the reproducibility of an analysis. This is determined by dividing the standard deviation of a sample by the mean for the same set and then multiplying by 100. As defined herein, the term RSD refers to the RSD value of the bromine content, as obtained by the "gridline-12-samples-test" defined hereinabove.

*The percentage of **additives** on the **fabric** ("Add-on")* was determined by the difference between sample weight before and after application of the FR formulation (deviation of $\pm$ 1 %).

*Fabric transparency* was assessed by measuring the CIE color difference, using a Datacolor Spectraflash 650 (datacolor). The colors of both treated and non-treated fabrics were measured, using the CIE color coordinates, wherein:

L* indicates the lightness coordinate;
C* indicates chroma coordinate, the perpendicular distance from the lightness axis (more distance being more chroma); and
h* indicates the hue angle, expressed in degrees.

The CIELAB color difference is then calculated as the difference in each of the color coordinates:

DL* being the lightness difference.
DC* being the chroma difference.
Dh* being the hue angle difference.
DH* being the metric hue difference.
DE* being the color difference, and is calculated as

$$DE^* = (DL^2 + DC^2 + DH^2)^{1/2}$$

### Flammability tests:

*ASTM D-6413 12 seconds ignition test:* In this method, samples are cut from the fabric to be tested, and are mounted on a frame that hangs vertically from inside the flame chamber. The sample is exposed to a controlled flame for a specified period of time (in this case for 12 seconds, one of the strictest flammability tests), and the "after-flame time" and the "after-glow time" are both recorded. Finally, the sample is torn by use of weights and the char length is measured. To pass, the average char length of five samples cannot exceed 7 inches (17.8 cm). In addition, none of the individual specimens can have a char length of 10 inches (25.4 cm).

### Washing Fastness Tests:

Samples treated with the flame retardant formulations described herein were subjected to 15 successive washing cycles in accordance with the washing procedure set forth below, followed by one drying cycle in accordance with commonly used drying procedure, based on the Standard Laboratory Practice for Home Laundering (AATCC technical manual/2001), unless otherwise noted.
In all washing cycles, the temperature of the washing water is maintained between 58 °C and 62 °C, for automatic washing machines, the washing cycle is set for normal washing cycle, and a synthetic detergent that conforms to Standard Laboratory Practice for Home Laundering (AATCC technical manual/2001) is used.

### EXAMPLE 1

### Preparation of *a* wet-milled FR-720 concentrate (milling base):

Tetrabromobisphenol-A bis(2,3-dibromopropyl ether) (labeled by the manufacturer as FR-720, 248 grams) was added in small portions to a mixed solution of deionized water (241 grams) using a nonionic dispersing agent (TritonX100® 2% by weight) and the dispersion was allowed to mix for 15 minutes. The size distribution of this coarse dispersion, characterized by a Malvern particle sizer, is presented in Table 1 below and in Figure 1A. $D_{10}$, $D_{50}$ and $D_{90}$ of the dispersion before milling were 26 microns, 105 microns and 289 microns, respectively.

**Table** 1

| Size ($\mu$m) | Volume under (%) | Size ($\mu$m) | Volume (%) | Size ($\mu$m) | Volume (%) |
|---|---|---|---|---|---|
| <2.188 | 0 | 26.303 | 10.27 | 316.228 | 91.47 |
| 2.512 | 0.03 | 30.200 | 11.83 | 363.078 | 93.30 |
| 2.884 | 0.10 | 34.674 | 13.60 | 416.869 | 94.65 |
| 3.311 | 0.17 | 39.811 | 15.72 | 478.630 | 95.69 |

(continued)

| Size (μm) | Volume under (%) | Size (μm) | Volume (%) | Size (μm) | Volume (%) |
|---|---|---|---|---|---|
| 3.802 | 0.27 | 45.709 | 18.32 | 549.541 | 96.52 |
| 4.365 | 0.39 | 52.481 | 21.56 | 630.957 | 97.23 |
| 5.012 | 0.55 | 60.250 | 25.59 | 724.436 | 97.84 |
| 5.754 | 0.77 | 69.183 | 30.47 | 831.764 | 98.39 |
| 6.607 | 1.07 | 79.433 | 36.20 | 954.993 | 98.86 |
| 7.586 | 1.45 | 91.201 | 42.67 | 1096.478 | 99.25 |
| 8.710 | 1.94 | 104.713 | 49.65 | 1258.925 | 99.55 |
| 10.000 | 2.56 | 120.226 | 56.84 | 1445.440 | 99.77 |
| 11.482 | 3.31 | 138.038 | 63.91 | 1659.587 | 99.91 |
| 13.183 | 4.20 | 158.489 | 70.54 | 1905.461 | 99.98 |
| 15.136 | 5.21 | 181.970 | 76.49 | 2187.762 | 100 |
| 17.378 | 6.33 | 208.930 | 81.57 | > 2187.762 | 0 |
| 19.953 | 7.55 | 239.883 | 85.73 | | |
| 22.909 | 8.86 | 275.423 | 89.00 | | |

Milling was conducted on an Agitator Bead Mill, Dyno®-Mill MULTILAB (manufactured by Wiley A. Bachofen (WAB)) using 0.3 millimeter (diameter) ceramic balls which filled about 65 % of the milling vessel volume, and running at medium speed (3-4 Kg/h). The milling can optionally be conducted with ceramic balls of different diameter (for example 1.5 millimeters, 2.5 millimeters etc.).

The coarse FR-720 dispersion was wet-milled at a rate of 3-4 kg/hour for about 20 minutes, to obtain a smooth and uniform mill base, which is termed hereinafter a "concentrate". The concentrate, containing about 40% by weight solids, was non-gritty and homogeneous.

The size distribution of the obtained milled FR-720, characterized by Malvern particle sizer, is presented in Table 2 below and in Figure 1B. $D_{10}$, $D_{50}$ and $D_{90}$ after milling were 3 microns, 14 microns and 38 microns respectively.

**Table 2**

| Size (μm) | Volume (%) | Size (μm) | Volume (%) | Size (μm) | Volume (%) |
|---|---|---|---|---|---|
| <0.550 | 0 | 5.754 | 17.98 | 60.256 | 95.76 |
| 0.631 | 0.12 | 6.607 | 20.78 | 69.183 | 96.46 |
| 0.724 | 0.35 | 7.586 | 24.18 | 79.433 | 96.92 |
| 0.832 | 0.71 | 8.710 | 28.30 | 91.201 | 97.25 |
| 0.955 | 1.19 | 10.000 | 33.17 | 104.713 | 97.55 |
| 1.096 | 1.80 | 11.482 | 38.80 | 120.226 | 97.85 |
| 1.259 | 2.53 | 13.183 | 45.08 | 138.038 | 98.17 |
| 1.445 | 3.38 | 15.136 | 51.84 | 158.489 | 98.51 |
| 1.660 | 4.35 | 17.378 | 58.82 | 181.970 | 98.85 |
| 1.905 | 5.41 | 19.953 | 65.74 | 208.930 | 99.17 |
| 2.188 | 6.57 | 22.909 | 72.30 | 239.883 | 99.45 |
| 2.512 | 7.81 | 26.303 | 78.22 | 275.423 | 99.67 |
| 2.884 | 9.13 | 30.200 | 83.32 | 316.228 | 99.85 |
| 3.311 | 10.53 | 34.674 | 87.48 | 363.078 | 99.94 |

(continued)

| Size (μm) | Volume (%) | Size (μm) | Volume (%) | Size (μm) | Volume (%) |
|---|---|---|---|---|---|
| 3.802 | 12.04 | 38.811 | 90.70 | 416.869 | 99.99 |
| 4.365 | 13.73 | 45.709 | 93.05 | 478.630 | 100.00 |
| 5.012 | 15.67 | 52.481 | 94.69 | >478.630 | 0 |

Another sample, prepared by pooling several batches of coarse FR-720 dispersions, and containing 37% solids, was wet milled as previously described. The viscosity of the dispersion was measured and was determined to be in the range of 200-1,700 centipoises (cP), depending on concentration. The size distribution of this second sample of milled FR-720 was also characterized by a Malvern particle sizer, wherein $D_5$, $D_{10}$, $D_{50}$, $D_{90}$ and $D_{95}$ after milling were 1.6 microns, 2.6 microns, 12.6 microns, 39 microns and 69 microns respectively.

Optionally, in order to increase the stability of the concentrate and to avoid cake formation, a small amount of carboxymethylcellulose (CMC, 0.5% by weight) was added to the concentrate. The obtained milled concentrate dispersion was left on a shelf for 4 months and remained stable (redispersion by simple mixing was easily achieved) during this period.

Furthermore, in order to increase the solid content of the milled concentrate from about 40% by weight to over 50%-55% by weight (so as to make transportation more effective), decantation was performed on the previously obtained concentrate. Decantation can be avoided if the wet milling is performed on a dispersion containing 50% solids (for example, under industrial conditions).

*EXAMPLE 2*

***General Protocol: Preparation of aqueous formulations of milled FR-720 from a milled FR-720 concentrate:***

To prepare 1 kg of formulation, the FR-720 concentrate, prepared according to Example 1, is re-dispersed in water (5-500 grams), further adding additional components, such as antimony oxide (from 0 to 400 grams and up to 1:3 Sb:Br molar ratio), acrylic binder (from 5 to 300 grams), surface active agents (from 5 to 50 grams), antifoaming agents (from 5 to 50 grams), preservatives (from 5 to 50 grams), stabilizing agents (from 0 to 50 grams), thickening agents (from 0 to 100 grams), wetting agents (from 5 to 50 grams), suspending agents (from 5 to 50 grams), pH buffers (from 5 to 100 grams) and any mixture thereof. The composition is mixed for about 20 minutes, adding more deionized water if necessary, to obtain a formulation having a viscosity in the range of 100 to 5000 cps, suitable for application on a flammable substrate. Dispersing agents are usually added at the concentrate preparation stage and are therefore not required again at this stage; however, their concentration can reach 5-50 grams per 1 Kg formulation. Examples 3-6 below represent specific formulations of the present invention, prepared according to this general procedure.

*EXAMPLE 3*

***A homogenized aqueous formulation of 17.3% milled FR-720, 15% binder and ATO***

An exemplary formulation containing 37.7% solids was prepared according to the general procedure of Example 2, by adding a mixed solution of deionized water (190 grams) and a Triton X100® dispersing agents (20 grams) to the FR-720 concentrate (346 grams) prepared according to Example 1. Antimony oxide (73 grams) was added thereafter and the dispersion was allowed to mix for 15 minutes. An acrylic binder (AC-200 W, 300 grams) was added during mixing and the dispersion was neutralized to pH=8 using ammonium hydroxide (20 grams), further adding thickening agent (50 grams), to obtain a formulation containing a total of 37.7% solids, as displayed in Table 3 below. The milled FR-720 white formulation was smooth, white and had good fluidity.

**Table 3**

| Component | Weight Percentage |
|---|---|
| Dry solids | 37.7 |
| pH | 8 |
| FR-720 | 17.3 |
| Br | 11.8 |

(continued)

| Component | Weight Percentage |
|---|---|
| ATO | 7.3 |
| Binder | 15.0 |
| Sb:Br | 1: 3 (molar) |

## EXAMPLE 4

### Homogenized aqueous formulations of 27% milled FR-720, 19% binder and ATO

Another exemplary formulation, containing 58% solids, was prepared by repeating the process of Example 3 while varying the amounts of FR-720, binder, ATO and water to obtain 27% FR-720, 19% binder and 12% ATO. The sample contained 2% dispersant. This formulation appeared smooth, white and had good fluidity.

## EXAMPLE 5

### Homogenized aqueous formulations containing 27% milled FR-720 with no binder and/or no ATO

Additional formulations according to the present embodiments were prepared to assess the contribution of the binder and the ATO to the formulation properties, by omitting one or both ingredients (ATO and/or binder) from the composition given in Example 3 (appearing as formulation 1 in Table 4 below), and adding deionized water to make up for the missing weight. These formulations appear as numbers 2A, 3 and 4A in Table 4 below.

Furthermore, in order to show the effect of the milling, formulations 2 and 4 were prepared once more, substituting the milled FR-720 with a non-milled FR-720 (appearing as formulations 2B and 4B in Table 4 below).

As another comparative experiment, formulations containing no FR-720 at all were also prepared: formulation 5 has only binder and formulation 6 had binder and ATO, as appears in Table 4 below.

### Table 4

| Formulation No. * | FR-720 | Binder | ATO | Deionized Water |
|---|---|---|---|---|
|  | (weight percent) | | | |
| 1 (identical to formulation of Example 3) | 27 | 19 | 12 | 42 |
| 2A | 27 | - | - | 73 |
| 2B | 27 | - | - | 73 |
| 3 | 27 | - | 12 | 61 |
| 4A | 27 | 19 | - | 54 |
| 4B | 27 | 19 | - | 54 |
| 5 | - | 19 | - | 81 |
| 6 | - | 19 | 12 | 69 |

*B- signifies FR-720 before milling;
all other formulations were prepared from milled FR-720.

## EXAMPLE 6

### Homogenized aqueous formulations of 18.7% milled FR-720, 15% binder, 8.3% AIASP and reduced amounts of ATO

Another milled FR-720 aqueous formulation was prepared, according to the process of Example 2, further adding Aluminum Ammonium Super Phosphate (AIASP, 27-31 grams) to improve the after-glow suppression and to reduce the ATO requirement in the formulation to a Sb:Br molar ratio of 1:6. Other additives, such as softeners, thickeners, UV-absorbers, water-repellents etc. are added, depending on the applicative requirements. The obtained FR-720 formulation was smooth, white and had good fluidity. Table 5 below details the composition of the FR-720/AIASP formulation:

**Table 5**

| Component | Weight Percentage |
|---|---|
| Dry solids | 40 |
| pH | 8 |
| FR-720 | 18.7 |
| Br | 12.6 |
| AIASP | 8.3 |
| $Sb_2O_3$ | 4.3 |
| Binder | 15.0 |
| Sb:Br | 1: 6 (molar) |

### EXAMPLE 7

#### General Protocol: Preparation of milled FR-720 films and coatings:

Milled FR-720 dispersions, prepared according **to** Examples **1** (concentrates) or 2-6 (formulations) above, are applied on a substrate by contacting (coating, dip-coating, spreading, padding, foaming and/or spraying) the substrate with the milled FR-720 dispersion. Then the substrate is cured at 140-180 °C (well above the melting temperature of FR-720: 113-117 °C), for 3-15 minutes, depending on the substrate. Examples 8-15 below disclose the preparation of films and coatings of preferred embodiments, on glass (Example 8) and on textile fabric (Examples 9-15).

### EXAMPLE 8

#### Characterization of milled FR-720 films on glass

The formulations prepared according to Examples 4 and 5 above were applied on the inside walls of glass turbidity test bottles, and on microscope slides, and their transparency was measured by turbimeter and using a light microscope, respectively, being cured at 160 °C for 15 minutes. The results are summarized in Table 6 below, wherein the film numbers correspond to the formulation numbers in Table 4. Film No. 1 represents the film obtained according to preferred embodiments, from a formulation containing milled FR-720, binder and ATO. This film was found to have a turbidity of 105.91 NTU. Film No. 2A represents another film obtained according to preferred embodiments, from a formulation containing milled FR-720 only. This film was found to be highly transparent, and had a turbidity of 9.41 NTU. Film No. 3 represents the film obtained according to preferred embodiments, from a formulation containing milled FR-720 and ATO (no binder). This film was found to have a turbidity of 128.74 NTU, corresponding to a very homogeneous dispersion of ATO in FR-720, which blocked out light most efficiently. Film No. 4A represents the film obtained according to preferred embodiments, from a formulation containing milled FR-720 and binder (no ATO). This film was found to have a turbidity of 55.29 NTU.

### Table 6

| Film No. | FR-720 | Acrylic binder | ATO | Turbidity [NTU] | Film description (slide under a light microscope) |
|---|---|---|---|---|---|
| 1 | ✓ | ✓ | ✓ | 105.91 | ATO particles (visible as black spots) are almost homogenously dispersed (Figure 2A) |
| 2A | ✓ | | | 9.41 | Transparent film of a molten FR-720 formulation (Figure 2B) |
| 3 | ✓ | | ✓ | 128.74 | ATO particles (visible as black spots) are homogenously dispersed (Figure 2C) |
| 4A | ✓ | ✓ | | 55.29 | Melt drops are uniformly dispersed as discernible clusters in the acrylic film (Figure 2D) |
| 5 | | ✓ | | 4.83 | transparent slide of a homogeneous acrylic binder film (Figure 2E) |
| 6 | | ✓ | ✓ | 107.54 | ATO particles (visible as black spots) are not homogenously dispersed in the acrylic film (Figure 2F) |

The comparative turbidimeter results show that the film prepared of an acrylic binder only (film no. 5) was as transparent as the film prepared of FR-720 only (film no. 2A). Furthermore, the film prepared from ATO dispersed in the acrylic binder (film no. 6) had a lower turbidity compared to the ATO/FR-720 (film no. 3), only due to phase separation and a formation of large ATO clusters in the acrylic binder. Film No. 6 was comparable in turbidity to film no. 1, signifying that the FR-720 therein is indeed molten and fully transparent within the acrylic film.

Microscopic image analysis clearly indicates the differences in the appearance of the respective films. Pictures 2B and 2E, which represent films prepared of FR-720 only (film no. 2A) and of an acrylic binder only (film no. 5), respectively, both showed transparent and uniform films. Pictures 2C and 2F demonstrate that ATO was better dispersed in FR-720 melt (film no. 3, picture 2C) than in acrylic latex (film no. 6, picture 2F). This shows the advantage of FR-720 in better dispersing ATO in the formulations.

### *EXAMPLE 9*

### *Application of the milled FR-720 dispersions of Examples 3 and 5 on a woven polyester fabric*

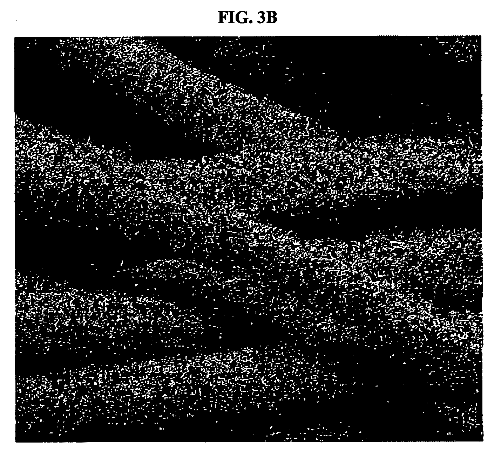

A polyester fabric weighing 164 grams per square meter was uniformly padded with the milled FR-720 aqueous formulation, prepared as described in Example 3 above, and cured at 160 °C for 4 minutes. The polyester fabric was laundered to remove excess material on the surface. Figure 3A presents a SEM micrograph of polyester fibers treated with the milled FR-720 formulation, clearly illustrating the even distribution of the coating on the fibers and the formation of a film of FR-720 on the fiber surface. In order to confirm the nature of the fiber coating, X-Ray elemental analysis of the SEM sample surface was conducted on the SEM/EDS device, confirming the bromine content in the material that covered the fibers and was between the fibers (see purple dots in Figure 3B).

Another polyester fabric sample was treated with a formulation containing only a dispersion of milled FR-720 (formulation 2A in Table 4 above, Example 5) and cured at 160 °C for 4 minutes. The coating appeared as melt on the fabric. SEM pictures of the sample are shown in Figures 4A-C. Figure 4A (taken at a x100 magnification) depicts the molten FR-720 spread very homogenously on the fabric. Figures 4B and 4C present the appearance of the melt in higher magnifications (x200 and x400, respectively). These figures further show that the melt smoothly and completely coats the fibers and is observed deep in the yarn core, and that no significant clumps or inter yarn adhesions are observed.

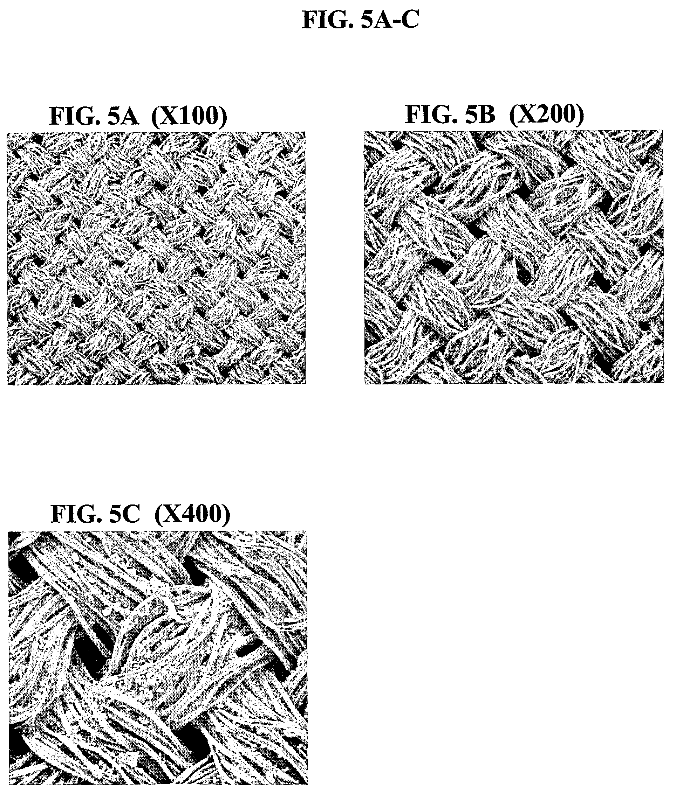

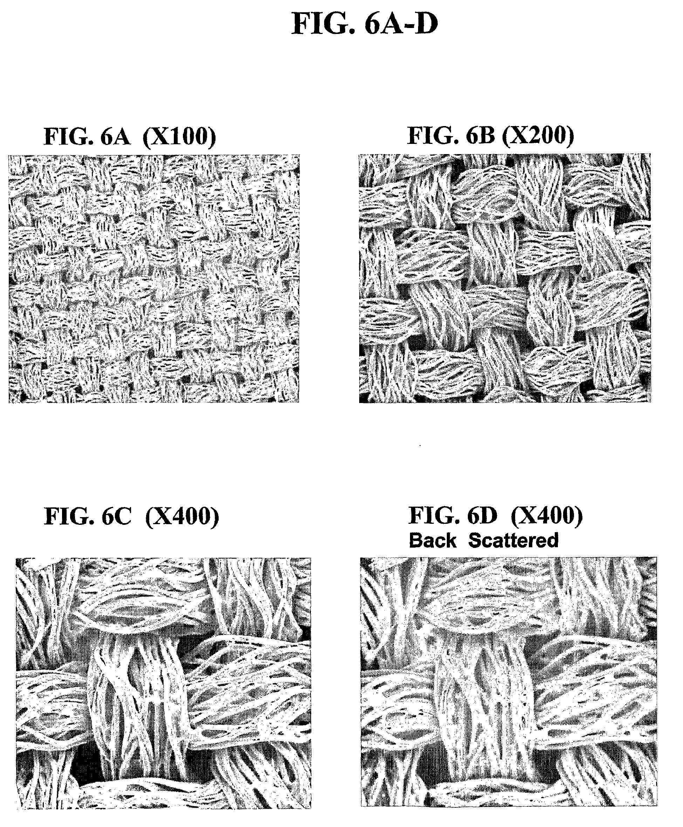

Yet another polyester fabric sample was treated with a formulation containing a dispersion of milled FR-720 and an acrylic binder (formulation 4A in Table 4 above, Example 5). The coating contained particles. SEM pictures of the sample before curing are shown in Figures 5A-C. Figure 5A (taken at a x100 magnification) shows that the whole sample is evenly covered with the material. Figures 5B and 5C present the appearance of the melt in higher magnifications (x200 and x400, respectively). These figures further show that the diameter of many particles is less than the fiber's diameter and there is good penetration to the yarns core. The coated polyester sample was then cured at 160 °C for 4 minutes. The coating appeared as a melt in film. SEM pictures of the sample are shown in Figures 6A-D. Figure 6A (taken at a x100 magnification) presents the appearance of molten, milled FR-720 with cured acrylic binder on the PET fabric and shows that the whole sample is covered with FR material as located by the back-scattered electron image. Figures 6B and 6C present the appearance of the melt in higher magnifications (x200 and x400, respectively). These figures further show that the acrylic film uniformly coats the fibers and can be detected in the yarn core. Little inter yarn adhesion or clumping is observed. Figure 6D presents a back-scattered electron image technique used on Picture 6B above, at X400 magnification, conducted in order to detect the location of the FR-720 melt (bromine) under the acrylic film. This figure clearly shows that the flame retardant is present and spread homogenously on the fibers.

In another sample of cured polyester treated by the 4A formulation, the average bromine content on the fabric was determined to be 17.73%, having an RSD of the bromine content of ±11.5%.

### EXAMPLE 10

#### Comparative Application of non-milled FR-720 dispersions on a woven polyester fabric

In a comparative experiment, dispersions of the coarse (non-milled) FR-720, prepared as described in Example 1 above, were applied on a polyester fabric weighing 164 grams per square meter. The fabric was air-dried and the formulation was then cured at 160 °C for 4 minutes. The add-on was determined to be 35 %. The treated fabric passed Flammability Tests (ASTM D-6413-99) with negligible dripping. Although there were no visible streak marks the fabric was merely translucent.

In additional comparative experiments, formulations 2B (containing non-milled FR-720) and 4B (containing non-milled FR-720 and acrylic binder) were similarly applied on a polyester fabric sample and cured at 160 °C for 4 minutes.

Formulation 2B, containing non-milled FR-720 only, appeared as a melted coating on the fabric. SEM pictures of the sample are shown in Figures 7A-C. Figure 7A (taken at a x100 magnification) depicts some particles that did not melt during the curing process, and a melt of big particles (agglomerates) appears to have formed a brittle film between the fibers. Figures 7B and 7C present the appearance of the melt in higher magnifications (x200 and x400, respectively). These figures further show, in addition to clumps that partially melt during the curing process, that the melt was non-uniform and that it did not evenly cover the fibers. Furthermore, inter yarn adhesions were observed.

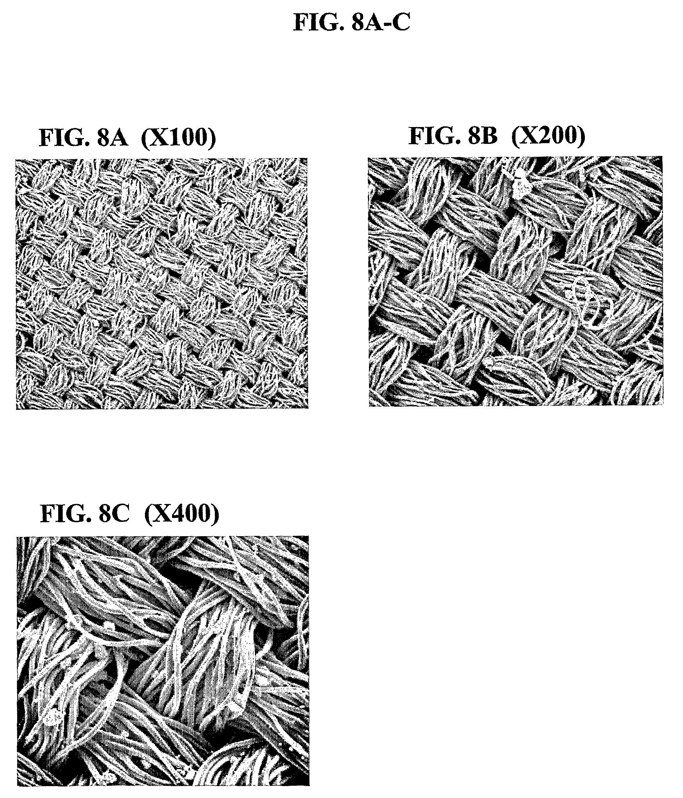

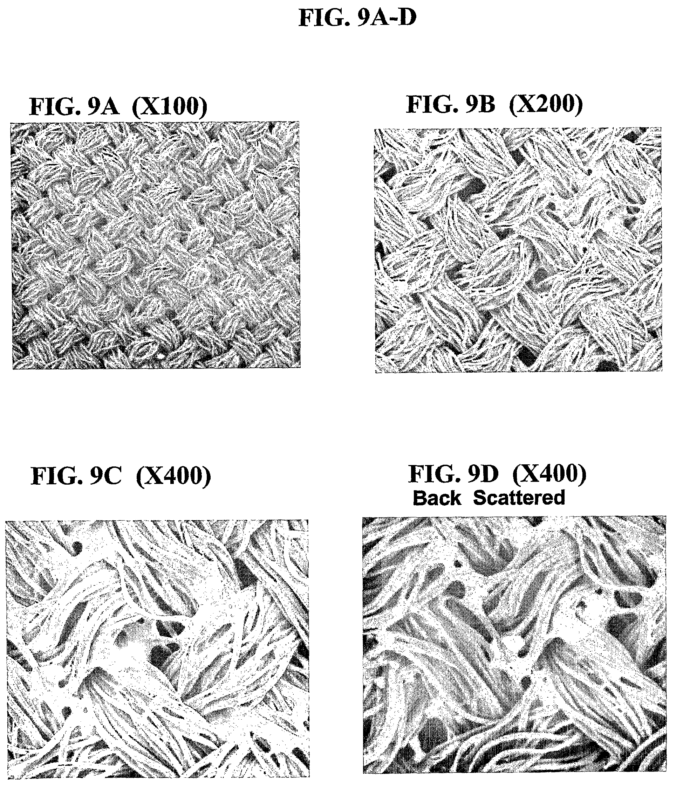

Before curing of formulation 4B (containing a dispersion of a non-milled FR-720 and an acrylic binder) particles were present on the fabric. SEM pictures of the sample at this stage are shown in Figures 8A-C. These figures show that the diameter of many particles was bigger than the fiber diameter and there was limited penetration to the yarns core. The sample was then cured at 160 °C for 4 minutes, and a melt was apparent on the fabric. SEM pictures of the sample at this stage are shown in Figures 9A-D. Figure 9A (taken at a x100 magnification) presents the appearance of molten non-milled FR-720, with a cured acrylic binder on the polyester fabric. Particles that did not melt during the curing process were observed, covered with acrylic film. Figures 9B and 9C present the appearance of the melt in higher magnifications (x200 and x400, respectively). These figures further show that the acrylic film that coats the fibers was not smooth. A large quantity of material was observed between the yarns. Figure 9D presents a back-scattered electron image technique used on Picture 9B above, at X400 magnification, conducted in order to detect the location of the FR-720 melt (bromine) under the acrylic film. This figure clearly shows that the flame retardant was present only in inter yarn clumps inside the acrylic film and was not spread homogenously on the fibers.

In another sample of cured polyester treated by the 4B formulation, the average bromine content on the fabric was determined to be 7.11%, having an RSD of the bromine content of ± 20%.

The results of the bromine content analysis express the difference in bromine absorption when applying non-milled versus milled FR-720 on the fabric. It is clear that at same conditions the amount of milled FR-720 that absorbs on the fabric (equivalent to 17.73% bromine) is much higher than the amount of the same FR, when applied in its non-milled form (equivalent to 7.11% bromine). Furthermore, the difference in bromine distribution throughout the fabric, as reflected in the RSD values, indicates a far more homogenous coating on the fabric when using a milled FR-720, as compared to non-milled FR-720 (RSD: 11.5%, RSD: 20.0% respectively). These results are consistent with the look and feel and appearance in micrographs of the fabric when using milled- versus non-milled FR-720 coatings.

### EXAMPLE 11

#### Application of the milled FR-720 dispersions of Example 3 on a white 100% knitted cotton fabric

A 100% cotton knitted fabric weighing 200 grams per square meter was padded with the FR-720 aqueous formulation of Table 3, prepared as described in Example 3 above. The formulation was smoothly applied on the fabric and no grittiness or accumulation on the pad rollers was observed. The add-on was determined to be 30.8 %, the FR content on the fabric being 14.2% (calculated to be equivalent to 9% bromine) and the ATO content on the fabric was 6.0%. The treated fabric was laundered for 15 washing cycles, after which it was cured at 105 °C for 30 minutes to achieve a "bone-dry" sample and passed an ASTM D 6413-99 12-seconds ignition flammability test, having an after flame time of 2.0 seconds, an after glow time of 113 seconds, and a char length of 4.5 centimeters. The FR coating obtained on the fabric was transparent, with fabric fibers clearly visible under the film.

Formulation No. 2A (FR-720 only), prepared according to Example 4 above, was similarly padded on a 100% cotton knitted fabric of the same density, and the obtained coating was homogeneous, non-gritty and completely transparent.

### EXAMPLE 12

### Application of milled FR-720/AIASP dispersion of Example 6 on a white 100% knitted cotton fabric

A 100 % cotton knitted fabric weighing 200 grams per square meter was padded with the FR-720/AIASP aqueous formulation, prepared as described in Example 6 above. The add-on was determined to be 30 %, the FR content on the fabric being 14.2 % (equivalent to 9.6 % bromine), the AIASP content on the fabric being 6.3 % and the ATO content on the fabric being 3.3 %. The formulation was smoothly applied on the fabric and no grittiness or accumulation on the pad rollers was observed. The fabric treated with this formulation were laundered for 15 washing cycles, after which it was cured at 105 °C for 30 minutes to achieve a "bone-dry" sample and passed an ASTM D 6413-99 12-seconds ignition flammability test, having an after flame time of 0 seconds, an after glow time of 33 seconds, and a char length of 14 centimeters.

### EXAMPLE 13

### Application of milled FR-720 dispersions on a colored 100% knitted cotton fabric

A 100 % black colored cotton twill weighing 200 grams per square meter was padded with the milled FR-720 aqueous formulations prepared according to Examples 4 and 5 above. The CIE Lch color difference was measured using a spectrophotometer, compared to a similar white fabric, as displayed in Table 7 below (formulation numbers correspond to the formulation numbers in Table 4 above).

### Table 7

| Formulation No. | FR-720 | Acrylic binder | ATO | dL | dC | dH | dE |
|---|---|---|---|---|---|---|---|
| 1 | ✓ | ✓ | ✓ | 8.56 | 1.57 | -0.75 | 8.5 |
| 2A | ✓ | | | 1.36 | -0.09 | -0.13 | 1.37 |
| 3 | ✓ | | ✓ | 8.28 | 0.93 | -0.60 | 8.35 |
| 4A | ✓ | ✓ | | 1.89 | 0.24 | -0.28 | 1.93 |
| 5 | | ✓ | | 0.92 | -0.13 | -0.04 | 0.93 |
| 6 | | ✓ | ✓ | 9.43 | 0.90 | -0.63 | 9.30 |

Table 7 shows a shift in Lightness (dL) together with a negligible change in chroma (dC) and/or hue (dH). Formulations 5 and 6 are comparative examples and contain no FR-720: The pure acrylic film (formulation 5) was used as a reference for a transparent coating, showing the least effect on fabric appearance (low dE 0.93) indicating high transparency and the least change in refractive index compared to air. On the other side of the scale, the acrylic and ATO film (formulation 6) was used as a reference for an opaque coating, showing the highest effect on fabric appearance (high dE, 9.30), and indicating ATO's critical effect on appearance.

Formulation 2A (FR-720) and Formulation 4A (FR-720 + acrylic binder) were characterized by relatively low dE values (1.37 and 1.93, respectively). The formulations containing ATO (formulations 1 and 3) had higher color shifts, proving the effective dispersion of the ATO particles within the FR-720 and binder particles.

*EXAMPLE 14*

***Application of milled FR-720 dispersions on a colored 50% cotton/50% polyester** twill* **fabric**

A blue colored 50 % cotton/50 % polyester twill fabric, weighing 200 grams per square, was padded with the milled FR-720 aqueous formulations, prepared according to Examples 4 and 5 above. The CIE Lch color difference, compared to a similar white fabric, as displayed in Table 8 below (formulation numbers correspond to the formulation numbers in Table 4 above). Formulations 5 and 6 are comparative examples and contain no FR-720.

**Table 8**

| Formulation No | FR-720 | Acrylic binder | ATO | dL | dC | dH | dE |
|---|---|---|---|---|---|---|---|
| 1 | ✓ | ✓ | ✓ | 6.32 | -3.87 | -1.24 | 7.51 |
| 2A | ✓ | | | -0.40 | -2.92 | 0.55 | 3.00 |
| 3 | ✓ | | ✓ | 8.03 | -4.01 | -2.39 | 9.29 |
| 4A | ✓ | ✓ | | -0.58 | -2.56 | -1.00 | 2.81 |
| 5 | | ✓ | | -1.15 | -2.04 | 1.06 | 2.57 |
| 6 | | ✓ | ✓ | 3.82 | -2.09 | -0.54 | 4.39 |

Table 8 shows larger changes in the chroma (dC) as a result of an easier penetration of the hydrophobic FR-720 into synthetic fibers, as is also illustrated in Figures 3A and 3B. Again, the pure acrylic film (formulation 5) had the least effect on fabric appearance, followed by formulation 2A (FR-720) and formulation 4 (FR-720 + acrylic binder), and finally with the formulations containing ATO (formulations 1, 3 and 6). Again, the color shift of formulation 1 proves the effective dispersion of the ATO particles within the FR-720 and binder particles.

*EXAMPLE 15*

***Application of milled FR-720 dispersions on a colored 100% acrylic plain weave fabric***

A red brick colored 100% acrylic plain weave fabric, weighing 140 grams per square meter, was padded with the FR-720 aqueous formulations prepared as described in Example 3 above. The CIE Lch color difference, compared to a similar white fabric, is displayed in Table 9 below (formulation numbers correspond to the formulation numbers in Table 4 above). Formulations 5 and 6 are comparative examples and contain no FR-720.

**Table 9**

| Formulation No | FR-720 | Acrylic binder | ATO | dL | dC | dH | dE |
|---|---|---|---|---|---|---|---|
| 1 | ✓ | ✓ | ✓ | 3.47 | -5.86 | -2.24 | 7.17 |
| 2A | ✓ | | | -1.88 | -4.60 | -1.42 | 5.16 |
| 3 | ✓ | | ✓ | 4.65 | -6.34 | -2.25 | 8.16 |
| 4A | ✓ | ✓ | | -0.9 | -4.21 | -1.47 | 4.55 |
| 5 | | ✓ | | -0.32 | -0.24 | -0.36 | 0.54 |
| 6 | | ✓ | ✓ | 3.27 | -4.91 | -2.03 | 6.24 |

Table 9 also shows a large change in chroma (dC) as a result of an easier penetration of the hydrophobic FR-720 into the acrylic synthetic fiber, as is also illustrated in Figures 3A and 3B. This fabric shows the same pattern of the pure acrylic film (formulation 5) having the least effect on fabric appearance, followed by the FR-720 formulation (no. 2), the FR-720 and acrylic binder (no. 4), and finally the formulations containing ATO (formulations 1, 3 and 6). As in the previous colored fabrics, the color shift of formulation 1 proves the effective dispersion of the ATO particles within the FR-720 and binder particles.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

## Claims

1. A flame retardant formulation comprising tetrabromobisphenol A bis(2,3-dibromopropyl ether) (FR-720) particles in an aqueous carrier, wherein the particles have a $d_{50}$ smaller than 50 microns, the formulation being either free of a binding agent or further comprising a binding agent whereas an amount of said binding agent is less than 25 weight percentages of the total weight of the formulation.

2. The formulation of claim 1, further comprising a dispersing agent.

3. The formulation of claim 1, wherein said amount of said binding agent ranges from 5 weight percentages to 20 weight percentages of the total weight of the formulation.

4. The formulation of any of claims 1-3, wherein the particles are **characterized by** $d_{90}$ smaller than 100 microns.

5. The formulation of any of claims 1-4, further comprising a smoldering suppressant agent.

6. The formulation of any of claims 1-5, further comprising a flame retardant synergist.

7. The formulation of any one of claims 1-6, being in a form of an aqueous dispersion.

8. The formulation of any of claims 1-7, comprising FR-720 in an amount of between 5 weight percents to 70 weight percents, an acrylic binder in an amount of between 5 weight percents to 20 weight percents, antimony oxide in an amount of up to 40 weight percents, and water.

9. The formulation of claim 8, further comprising AluminumammoniumSuperPhosphoric acid salt (AIASP) in an amount of up to 70 weight percents.

**10.** A flammable textile fabric, being coated by a flame retardant film, wherein said film is formed upon applying the formulation of any one of claims 1-9 to the textile fabric.

**11.** The flammable textile fabric of claim 10, having a durability of at least 15 washing cycles.

**12.** A process of preparing the flame retardant formulation of any of claims 1-9, the process comprising:

mixing tetrabromobisphenol A bis(2,3-dibromopropyl ether) (FR-720) particles having a $d_{50}$ that is larger than 50 microns, with an aqueous carrier,
and milling said dispersion until:

a) the FR-720 particles have a $d_{90}$ that is smaller than 100 microns; and/or
b) the particles have a $d_{50}$ that is smaller than 50 microns; and/or
c) the FR-720 particles have a $d_{10}$ that is smaller than 10 microns.

**13.** A process of applying the flame retardant formulation of any of claims 1-9 onto a flammable textile fabric, the process comprising:

Contacting the flammable textile fabric with the flame retardant formulation of any of claims 1-9, to thereby obtain a flammable textile fabric having said formulation applied thereof; and
heating said treated flammable textile fabric.

**Patentansprüche**

**1.** Flammhemmende Formulierung, umfassend Tetrabrombisphenol-A-bis(2,3-dibrompropylether)- (FR-720-)Partikel in einem wässrigen Träger, wobei die Partikel einen $d_{50}$ von weniger als 50 Mikrometer aufweisen, wobei die Formulierung entweder frei von einem Bindemittel ist oder ferner ein Bindemittel umfasst, wobei eine Menge des Bindemittels weniger als 25 Gewichtsprozent des Gesamtgewichts der Formulierung beträgt.

**2.** Formulierung nach Anspruch 1, ferner ein Dispergiermittel umfassend.

**3.** Formulierung nach Anspruch 1, wobei die Menge des Bindemittels im Bereich von 5 Gewichtsprozent bis 20 Gewichtsprozent des Gesamtgewichts der Formulierung beträgt.

**4.** Formulierung nach einem der Ansprüche 1 bis 3, wobei die Partikel durch einen $d_{90}$ von weniger als 100 Mikrometer gekennzeichnet sind.

**5.** Formulierung nach einem der Ansprüche 1 bis 4, ferner ein das Schwelen unterdrückendes Mittel umfassend.

**6.** Formulierung nach einem der Ansprüche 1 bis 5, ferner einen flammhemmenden Synergisten umfassend.

**7.** Formulierung nach einem der Ansprüche 1 bis 6, die in Form einer wässrigen Dispersion vorliegt.

**8.** Formulierung nach einem der Ansprüche 1 bis 7, FR-720 in einer Menge zwischen 5 Gewichtsprozent und 70 Gewichtsprozent, ein Acrylbindemittel in einer Menge zwischen 5 Gewichtsprozent und 20 Gewichtsprozent, Antimonoxid in einer Menge von bis zu 40 Gewichtsprozent und Wasser umfassend.

**9.** Formulierung nach Anspruch 8, ferner Aluminiumammonium-Superphosphorsäure-Salz (AIASP) in einer Menge von bis zu 70 Gewichtsprozent umfassend.

**10.** Entflammbares Textilgewebe, das mit einem flammhemmenden Film beschichtet ist, wobei der Film gebildet wird, wenn die Formulierung nach einem der Ansprüche 1 bis 9 auf das Textilgewebe aufgebracht wird.

**11.** Entflammbares Textilgewebe nach Anspruch 10 mit einer Haltbarkeit von mindestens 15 Waschzyklen.

**12.** Verfahren zum Herstellen der flammhemmenden Formulierung nach einem der Ansprüche 1 bis 9, wobei das Verfahren Folgendes umfasst:

Mischen von Tetrabrombisphenol-A-bis(2,3-dibrompropylether)- (FR-720-) Partikeln mit einem $d_{50}$, der mehr als 50 Mikrometer beträgt, mit einem wässrigen Träger, und

Vermahlen der Dispersion, bis:

a) die FR-720-Partikel einen $d_{90}$ aufweisen, der weniger als 100 Mikrometer beträgt, und/oder

b) die Partikel einen $d_{50}$ aufweisen, der weniger als 50 Mikrometer beträgt, und/oder

c) die FR-720-Partikel einen $d_{10}$ aufweisen, der weniger als 10 Mikrometer beträgt.

**13.** Verfahren zum Aufbringen der flammhemmenden Formulierung nach einem der Ansprüche 1 bis 9 auf ein entflammbares textiles Flächengebilde, wobei das Verfahren Folgendes umfasst:

In-Kontakt-Bringen des entflammbaren Textilgewebes mit der flammhemmenden Formulierung nach einem der Ansprüche 1 bis 9, um dadurch ein entflammbares Textilgewebe mit der darauf aufgebrachten Formulierung zu erhalten, und

Erhitzen des behandelten entflammbaren Textilgewebes.

## Revendications

**1.** Formulation ignifuge comprenant des particules de tétrabromobisphénol A bis(2,3-dibromopropyl éther) (FR-720) dans un support aqueux, dans laquelle les particules ont un $d_{50}$ inférieur à 50 microns, la formulation soit étant exempte d'agent de liaison soit comprenant en outre un agent de liaison tandis qu'une quantité dudit agent de liaison est inférieure à 25 pour cent en poids du poids total de la formulation.

**2.** Formulation selon la revendication 1, comprenant en outre un agent de dispersion.

**3.** Formulation selon la revendication 1, dans laquelle ladite quantité dudit agent de liaison se situe dans la plage de 5 pour cent en poids à 20 pour cent en poids du poids total de la formulation.

**4.** Formulation selon l'une quelconque des revendications 1 à 3, dans laquelle les particules sont **caractérisées par** un $d_{90}$ inférieur à 100 microns.

**5.** Formulation selon l'une quelconque des revendications 1 à 4, comprenant en outre un agent anti-combustion lente.

**6.** Formulation selon l'une quelconque des revendications 1 à 5, comprenant en outre un synergiste ignifuge.

**7.** Formulation selon l'une quelconque des revendications 1 à 6, étant sous la forme d'une dispersion aqueuse.

**8.** Formulation selon l'une quelconque des revendications 1 à 7, comprenant du FR-720 en une quantité située entre 5 pour cent en poids et 70 pour cent en poids, un liant acrylique en une quantité située entre 5 pour cent en poids et 20 pour cent en poids, de l'oxyde d'antimoine en une quantité maximale de 40 pour cent en poids, et de l'eau.

**9.** Formulation selon la revendication 8, comprenant en outre un sel d'acide aluminium-ammonium-super-phosphorique (AIASP) en une quantité maximale de 70 pour cent en poids.

**10.** Tissu inflammable, étant revêtu d'un film ignifuge, dans lequel ledit film est formé par application de la formulation selon l'une quelconque des revendications 1 à 9 sur le tissu.

**11.** Tissu inflammable selon la revendication 10, ayant une durabilité d'au moins 15 cycles de lavage.

**12.** Procédé de préparation de la formulation ignifuge selon l'une quelconque des revendications 1 à 9, le procédé comprenant :

le mélange de particules de tétrabromobisphénol A bis(2,3-dibromopropyl éther) (FR-720) ayant un $d_{50}$ qui est supérieur à 50 microns, avec un support aqueux, et le broyage de ladite dispersion jusqu'à ce que :

a) les particules de FR-720 aient un $d_{90}$ inférieur à 100 microns ; et/ou

b) les particules aient un $d_{50}$ inférieur à 50 microns ; et/ou

c) les particules de FR-720 aient un $d_{10}$ inférieur à 10 microns.

13. Procédé d'application de la formulation ignifuge selon l'une quelconque des revendications 1 à 9 sur un tissu inflammable, le procédé comprenant :

la mise en contact du tissu inflammable avec la formulation ignifuge selon l'une quelconque des revendications 1 à 9, pour ainsi obtenir un tissu inflammable sur lequel est appliquée la formulation ; et
le chauffage dudit tissu inflammable traité.

# FIG. 1A

# FIG. 1B

**FIG. 2A**

**FIG. 2B**

**FIG. 2C**

**FIG. 2D**

**FIG. 2E**

**FIG. 2F**

**FIG. 3A**

**FIG. 3B**

# FIG. 4A-C

## FIG. 4A (X100)

## FIG. 4B (X200)

## FIG. 4C (X400)

## FIG. 5A-C

### FIG. 5A (X100)

### FIG. 5B (X200)

### FIG. 5C (X400)

# FIG. 6A-D

### FIG. 6A (X100)

### FIG. 6B (X200)

### FIG. 6C (X400)

### FIG. 6D (X400)
**Back Scattered**

## FIG. 7A-C

### FIG. 7A (X100)

### FIG. 7B (X200)

### FIG. 7C (X400)

## FIG. 8A-C

### FIG. 8A (X100)

### FIG. 8B (X200)

### FIG. 8C (X400)

## FIG. 9A-D

### FIG. 9A (X100)

### FIG. 9B (X200)

### FIG. 9C (X400)

### FIG. 9D (X400)
**Back Scattered**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3955032 A
- US 4600606 A
- WO 07096883 A
- US 5710347 A
- WO 05103361 A

**Non-patent literature cited in the description**

- Antimony and other inorganic Flame Retardants. **TOUVAL, I.** Kirk Othmer's Encyclopedia of Chemical Technology. John Wiley and Sons, 1993, vol. 10, 936-954
- **DONALD E. GARDNER (CHAIR.** Toxicological Risks of Selected Flame-Retardant Chemicals. *Subcommittee on Flame-Retardant Chemicals, Committee on Toxicology, Board on Environmental Studies and Toxicology, National Research Council,* 2000
- *CHEMICAL ABSTRACTS,* 21850-44-2
- *CHEMICAL ABSTRACTS,* 1309-64-4